# EUROPEAN PATENT APPLICATION

(11) **EP 4 851 237 A1**
(43) Date of publication of application: **09.12.2026**
(21) Application number: 25748154.9
(22) Date of filing: 27.01.2025
(51) Int. Cl.: C08K 5/20, C08K 3/32, C08K 5/16, C08K 5/32, C08K 5/521, C08K 5/523, C08L 67/00, C08L 101/16

(54) **METHOD FOR PRODUCING ALIPHATIC POLYESTER RESIN COMPOSITION, ALIPHATIC POLYESTER RESIN COMPOSITION, AND MARINE DEGRADATION PROMOTER**

(30) Priority: 02.02.2024 JP 2024014869; 08.08.2024 JP 2024133360
(71) Applicant: JSP Corporation, Tokyo 100-0005 (JP)
(72) Inventor: MASUMOTO, Hisashi, Kanuma-shi, Tochigi 322-0014 (JP)
(74) Representative: Gille Hrabal Partnerschaftsgesellschaft mbB Patentanwälte
(86) International application number: PCT/JP2025/002431
(87) International publication number: WO 2025/164572

(57) **Abstract**

Provided is a method for producing an aliphatic polyester-based resin composition produced by heating and kneading an aliphatic polyester-based resin and a nitrogen compound, in which a solubility of the nitrogen compound in water at 20°C is 50 g/100 mL or less. Also provided are a method for producing an aliphatic polyester-based resin composition, by which the aliphatic polyester-based resin composition having marine degradability and excellent durability against moisture can be obtained, an aliphatic polyester-based resin composition, and a marine degradation promoter.

## Description

### TECHNICAL FIELD

The present invention relates to a method for producing an aliphatic polyester-based resin composition, an aliphatic polyester-based resin composition, and a marine degradation promoter.

### BACKGROUND ART

Plastics are widely used as materials for packaging materials, daily necessities, electric appliances, machine parts, playground equipment, and the like. On the other hand, there is a concern that plastic products and wastes thereof which have flowed out into the sea for some reason may be present on the sea or in the sea as so-called plastic waste for a long period of time, thereby causing marine pollution.

In order to suppress marine pollution caused by such plastic waste, the use of marine biodegradable plastics having a property of decomposing in the ocean is expected.

For example, PTL 1 discloses a marine biodegradation promoting additive characterized by containing a nitrogen compound and a phosphorus compound as active ingredients, and a marine biodegradable resin composition in which the contents of nitrogen and phosphorus are specific amounts relative to the weight of carbon.

In addition, PTL 2 discloses a biodegradable resin composition containing a polyester resin and a compound having a specific amino group for the purpose of increasing the rate of biodegradation and increasing the biodegradation degree, particularly in the ocean.

### CITATION LIST

### PATENT LITERATURE

PTL 1: JP 2022-142016 A
PTL 2: WO 2023/058708

### SUMMARY OF INVENTION

### TECHNICAL PROBLEM

However, as in the resin compositions described in PTL 1 and PTL 2, although the marine degradability can be enhanced by adding an additive for promoting marine biodegradation to a biodegradable resin, there is a problem that the durability of the resin composition is lowered.

For example, depending on the use of a molded article obtained by molding the resin composition, such as a packaging container or a daily product, the molded article may come into contact with water or may be used under high humidity. Therefore, even in an environment in which moisture is present, a molded article having a certain durability in which deformation of the molded article and a decrease in physical properties are not likely to occur is required. However, in a molded article molded using a resin composition containing the additive, when the molded article is placed in an environment where a large amount of moisture is present, deformation of the molded article or deterioration of physical properties of the resin is likely to occur, and compatibility with degradability in the ocean has been a problem.

Therefore, there has been a demand for a resin composition having high marine degradability and excellent durability when used in an environment where moisture is present.

An object of the present invention is to provide a method for producing an aliphatic polyester-based resin composition capable of obtaining an aliphatic polyester-based resin composition having marine degradability and excellent durability against moisture. Another object of the present invention is to provide an aliphatic polyester-based resin composition having marine degradability and a marine degradation promoter.

### SOLUTION TO PROBLEM

As a result of intensive studies, the present inventors have found that the above problems can be solved by a method for producing an aliphatic polyester-based resin composition, in which an aliphatic polyester-based resin and a specific nitrogen compound are heated and kneaded.

That is, one embodiment of the present invention is a method for producing an aliphatic polyester-based resin composition, an aliphatic polyester-based resin composition, and a marine degradation promoter shown below.
[1] A method for producing an aliphatic polyester-based resin composition produced by heating and kneading an aliphatic polyester-based resin and a nitrogen compound, in which a solubility of the nitrogen compound in water at 20°C is 50 g/100 mL or less.
[2] The method for producing an aliphatic polyester-based resin composition according to [1], in which a 10% weight reduction temperature of the nitrogen compound determined by thermogravimetric analysis is 210°C or higher.
[3] The method for producing an aliphatic polyester-based resin composition according to [1] or [2], in which a blending amount of the nitrogen compound is 1 part by mass or more and 50 parts by mass or less with respect to 100 parts by mass of the aliphatic polyester-based resin.
[4] The method for producing an aliphatic polyester-based resin composition according to [1] or [2], in which the resin composition further contains a phosphorus compound, and a total of a blending amount of the nitrogen compound and a blending amount of the phosphorus compound is 2 parts by mass or more and 50 parts by mass or less with respect to 100 parts by mass of the aliphatic polyester-based resin.
[5] The method for producing an aliphatic polyester-based resin composition according to [4], in which a ratio of the blending amount of the phosphorus compound to the blending amount of the nitrogen compound is 1 to 1000.
[6] The method for producing an aliphatic polyester-based resin composition according to [4] or [5], in which the phosphorus compound has a solubility in water at 20°C of 50 mg/100 mL or less.
[7] The method for producing an aliphatic polyester-based resin composition according to any of [1] to [6], in which the nitrogen compound contains oxamide.
[8] The method for producing an aliphatic polyester-based resin composition according to any of [4] to [7], in which the phosphorus compound contains at least one selected from the group consisting of triphenyl phosphate and tricalcium phosphate.
[9] An aliphatic polyester-based resin composition containing an aliphatic polyester-based resin and a nitrogen compound, in which a total amount of nitrogen contained per 1 mL of water when the aliphatic polyester-based resin composition is immersed in water at 23°C for 72 hours at a proportion of 4 to 6 g of the aliphatic polyester-based resin composition per 100 mL of water is 0.01 µg or more and 20 µg or less per 1 g of the aliphatic polyester-based resin composition.
[10] The aliphatic polyester-based resin composition according to [9], in which a solubility of the nitrogen compound in water at 20°C is 50 g/100 mL or less.
[11] The aliphatic polyester-based resin composition according to [9] or [10], in which a content of the nitrogen compound in the resin composition is 1 part by mass or more and 50 parts by mass or less with respect to 100 parts by mass of the aliphatic polyester-based resin.
[12] The aliphatic polyester-based resin composition according to [9] or [10], in which the aliphatic polyester-based resin composition further contains a phosphorus compound, and a total of a content of the nitrogen compound and a content of the phosphorus compound in the aliphatic polyester-based resin composition is 2 parts by mass or more and 50 parts by mass or less with respect to 100 parts by mass of the aliphatic polyester-based resin.
[13] The aliphatic polyester-based resin composition according to any of [9] to [12], in which a biodegradation degree of the aliphatic polyester-based resin composition after the aliphatic polyester-based resin composition is held in seawater having a COD of 1 mg/L or less for 28 days is 1% or more.
[14] An aliphatic polyester-based resin composition containing an aliphatic polyester-based resin and oxamide.
[15] The aliphatic polyester-based resin composition according to [14], further containing a phosphorus compound.
[16] A marine degradation promoter used for obtaining the aliphatic polyester-based resin composition according to any of [9] to [15], in which the marine degradation promoter contains the nitrogen compound, and a solubility of the nitrogen compound in water at 20°C is 50 g/100 mL or less.

### ADVANTAGEOUS EFFECTS OF INVENTION

According to the present invention, it is possible to provide a method for producing an aliphatic polyester-based resin composition capable of obtaining an aliphatic polyester-based resin composition having marine degradability and further having excellent durability against moisture. It is also possible to provide an aliphatic polyester-based resin composition having marine degradability and a marine degradation promoter.

### DESCRIPTION OF EMBODIMENTS

### [Method for Producing Aliphatic Polyester-Based Resin Composition]

The method for producing the aliphatic polyester-based resin composition of the present invention is a method for producing an aliphatic polyester-based resin composition produced by heating and kneading an aliphatic polyester-based resin and a nitrogen compound, in which a solubility of the nitrogen compound in water at 20°C is 50 g/100 mL or less.

### <Aliphatic Polyester-Based Resin>

In the method for producing an aliphatic polyester-based resin composition of the present invention, an aliphatic polyester-based resin is used as a main raw material constituting the composition.

Examples of the aliphatic polyester-based resin include a copolymer of a polyvalent fatty acid and an aliphatic polyol, a polymer of a fatty acid having a hydroxy group, and a polymer of lactone, and at least one selected from the group consisting of a copolymer of a polyvalent fatty acid and an aliphatic polyol, a polymer of a fatty acid having a hydroxy group, and a polymer of lactone is preferable, at least one selected from the group consisting of a copolymer of a divalent fatty acid and an aliphatic diol, and a polymer of a fatty acid having a hydroxy group is more preferable, and a polymer of a fatty acid having a hydroxy group is still more preferable.

As the aliphatic polyester-based resin, a biodegradable aliphatic polyester-based resin having biodegradability is preferable.

The weight-average molecular weight (Mw) of the aliphatic polyester-based resin is preferably 10,000 or more, more preferably 50,000 to 1,000,000, still more preferably 50,000 to 500,000, yet still more preferably 50,000 to 400,000, yet still more preferably 50,000 to 300,000, yet still more preferably 100,000 to 300,000, and yet still more preferably 150,000 to 300,000.

Since the weight-average molecular weight (Mw) of the aliphatic polyester-based resin is within the above range, it is possible to stably obtain a resin composition having excellent marine degradability and good mechanical properties such as tensile properties.

The weight-average molecular weight (Mw) of the aliphatic polyester-based resin can be measured by performing gel permeation chromatography analysis using an aliphatic polyester-based resin dissolved in chloroform as an analysis sample. Specifically, it can be measured according to the method described in Examples. The weight-average molecular weight (Mw) of the aliphatic polyester-based resin is a weight-average molecular weight in terms of polystyrene.

The aliphatic polyester-based resin preferably contains at least one selected from the group consisting of a polylactic acid-based (PLA) resin which is a polymer of lactic acid, a polybutylene succinate-based (PBS) resin which is a polymer of a dicarboxylic acid containing succinic acid and a diol containing butanediol, a polybutylene adipate-based resin which is a polymer of a dicarboxylic acid containing adipic acid and a diol containing butanediol, a polyhydroxybutyrate-based resin which is a polymer of 3-hydroxybutyric acid, a polyglycolic acid-based (PGA) resin which is a polymer of glycolic acid, and a poly-ε-caprolactone-based (PCL) resin which is a polymer of ε-caprolactone.

The aliphatic polyester-based resin may contain a copolymerization component derived from another compound in addition to the main component constituting each resin as long as the object of the present application can be achieved. For example, polybutylene adipate-based resins include polybutylene adipate terephthalate (PBAT) which is a copolymer of butanediol, adipic acid, and terephthalic acid, and the like, and polyhydroxybutyrate-based resins include poly(3-hydroxybutyrate-co-3-hydroxyhexanoate) (PHBH) which is a copolymer of 3-hydroxybutyric acid and 3-hydroxyhexanoic acid, and the like.

The aliphatic polyester-based resin more preferably contains at least one selected from the group consisting of a polylactic acid-based resin, a polybutylene succinate-based resin, a polybutylene adipate-based resin, and a polyhydroxybutyrate-based resin.

The aliphatic polyester-based resin more preferably contains at least one selected from the group consisting of a polylactic acid-based resin, a polybutylene succinate-based resin, and a polybutylene adipate-based resin, and still more preferably contains a polylactic acid-based resin (PLA), from the viewpoint of a large supply amount to the market and excellent mechanical properties such as tensile properties.

Aliphatic polyester-based resins such as polylactic acid-based resins, polybutylene succinate-based resins, and polybutylene adipate-based resins are resins that exhibit good mechanical properties such as good tensile properties, but are resins in which biodegradation does not easily proceed in seawater having a low COD.

On the other hand, in the present invention, by blending a nitrogen compound, which will be described later, with an aliphatic polyester-based resin to obtain a resin composition, it is possible to obtain a resin composition having good marine degradability without deteriorating the physical properties of the resin. In addition, in a case where the nitrogen compound described later is blended into an aliphatic polyester-based resin that relatively easily undergoes biodegradation to form a resin composition, it is possible to further enhance the marine degradability of the resin while maintaining the physical properties of the resin.

From such a viewpoint, the aliphatic polyester-based resin is more preferably at least one selected from the group consisting of a polylactic acid-based resin, a polybutylene succinate-based resin, and a polybutylene adipate-based resin, and still more preferably a polylactic acid-based resin.

A resin other than the aliphatic polyester-based resin may be used in the present production method as long as the object of the present invention can be achieved and the effects of the present invention are not impaired, but from the viewpoint of improving the marine degradability, it is preferable that the blending amount of the resin having no biodegradability is as small as possible.

In addition, from the viewpoint of easily obtaining a molded article or the like having excellent rigidity, the glass transition temperature of the aliphatic polyester-based resin is preferably 30°C or higher, more preferably 40°C or higher, and still more preferably 50°C or higher. The upper limit of the glass transition temperature is approximately 120°C, and may be 100°C or may be 80°C.

The glass transition temperature of the aliphatic polyester-based resin is measured by differential scanning calorimetry (DSC) according to JIS K7121:1987. Glass transition temperature refers to the midpoint glass transition temperature of the DSC curve. As the condition adjustment of the test piece, "(3) When a glass transition temperature is measured after a certain heat treatment is performed" shall be adopted.

### <Nitrogen Compound>

The nitrogen compound used in the method for producing an aliphatic polyester-based resin composition of the present invention has a solubility in water at 20°C of 50 g/100 mL or less.

As shown in PTLs 1 and 2, in the conventionally used marine degradation promoter, a nitrogen compound that is easily eluted in seawater, that is, a nitrogen compound having a relatively high solubility in water has been considered to be preferable from the viewpoint of promoting the degradation of the resin. However, in a case where such a nitrogen compound is blended, when a molded article or the like composed of the resin composition is placed in a state of being in contact with water, deformation of the molded article or the like and deterioration of the physical properties of the resin composition are likely to occur even in a relatively short period of contact, probably because the elution of the nitrogen compound from the obtained resin composition is likely to occur excessively. In particular, when a relatively large amount of the nitrogen compound is blended in order to promote the decomposition of the resin, this tendency becomes more remarkable. In addition, such an influence of moisture can occur even when the resin composition does not directly contact water, for example, when the resin composition is placed under high humidity. For these reasons, a resin composition obtained by using a conventional marine degradation promoter has poor durability, and may not be able to maintain required mechanical properties in a high state over a long period of time when used in various applications. In addition, since a large amount of the nitrogen compound is likely to be eluted from the resin composition at an early stage, there is a possibility that the resin is not sufficiently decomposed when the resin composition flows out to the sea with less pollution and less organic matter, such as the open sea.

In the method for producing an aliphatic polyester-based resin composition of the present invention, it is considered that by using a nitrogen compound having relatively low solubility in water and hardly eluting into water, a resin composition having marine degradability and further excellent in durability against moisture can be obtained.

The solubility of the nitrogen compound in water at 20°C is 50 g/100 mL or less. The solubility of the nitrogen compound in water at 20°C is preferably 30 g/100 mL or less, more preferably 10 g/100 mL or less, still more preferably 5 g/100 mL or less, yet still more preferably 1 g/100 mL or less, yet still more preferably 0.5 g/100 mL or less, yet still more preferably 0.1 g/100 mL or less, yet still more preferably 0.09 g/100 mL or less, yet still more preferably 0.08 g/100 mL or less, and yet still more preferably 0.05 g/100 mL or less.

When the solubility of the nitrogen compound in water at 20°C is within the above range, it is possible to obtain a resin composition that is less likely to be deformed or deteriorated in physical properties even when used under high humidity or immersed in water while having marine degradability.

On the other hand, the solubility of the nitrogen compound in water is preferably 0.001 g/100 mL or more, and more preferably 0.01 g/100 mL or more.

When the solubility of the nitrogen compound in water at 20°C is within the above range, the resin composition can stably exhibit marine degradability even in seawater having a low COD.

The solubility in water at 20°C can be measured based on "Test No. 105: Water Solubility" of "OECD GUIDELINE FOR THE TESTING OF CHEMICALS". In order to measure the solubility in water, the following preliminary test is carried out, and then the solubility of the nitrogen compound in water is measured by either a column elution method or a flask method selected according to the result of the preliminary test.

As a preliminary test, first, 0.1 g of a sample (nitrogen compound) and 10 mL of pure water are placed in a 10-mL graduated cylinder with a glass stopper and shaken for 10 minutes. As a result of this operation, in a case where an undissolved sample is not confirmed in the graduated cylinder, the flask method is selected to measure the solubility of the nitrogen compound. On the other hand, in a case where an undissolved sample is confirmed in the graduated cylinder, this mixture is transferred to a 100-mL graduated cylinder, and then 90 mL of pure water is further added thereto and allowed to stand for 96 hours. As a result of this operation, in a case where an undissolved sample is not confirmed in the graduated cylinder, the flask method is selected to measure the solubility of the nitrogen compound, and in a case where an undissolved sample is confirmed in the graduated cylinder, the column elution method is selected to measure the solubility of the nitrogen compound.

The nitrogen compound has a 10% weight reduction temperature determined by thermogravimetric analysis of preferably 200°C or higher, more preferably 210°C or higher, still more preferably 220°C or higher, yet still more preferably 230°C or higher, and yet still more preferably 240°C or higher.

Examples of a method for producing an aliphatic polyester-based resin composition containing a biodegradable resin such as an aliphatic polyester-based resin and a nitrogen compound with high productivity include a method of forming an aliphatic polyester-based resin composition by heating and kneading a resin and a nitrogen compound by an extruder or the like. Here, when the nitrogen compound is excessively liable to be decomposed by heat, depending on the temperature at the time of heating and kneading, decomposition of the resin is promoted by the influence of nitrogen oxides generated by thermal decomposition of the nitrogen compound, or the like, and thus physical properties of the resin constituting the resin composition may be deteriorated. In addition, such a resin composition also tends to be easily deteriorated in physical properties of the resin constituting the molded article due to heat at the time of thermoforming, for example, when the resin composition is thermoformed to form the molded article.

On the other hand, when the 10% weight reduction temperature determined by thermogravimetric analysis is within the above range, it is possible to stably suppress deterioration in physical properties of the resin composition due to heat at the time of heating and kneading. In addition, a resin composition capable of stably thermoforming a molded article having required physical properties can be obtained.

The upper limit of the 10% weight reduction temperature determined by thermogravimetric analysis is not particularly limited as long as the object of the present invention can be achieved, but is preferably 400°C or lower, more preferably 350°C or lower, and still more preferably 300°C or lower.

The 10% weight reduction temperature determined by thermogravimetric analysis is determined by heating a measurement sample composed of a nitrogen compound under conditions of an air atmosphere and a heating rate of 10°C/min, and measuring the temperature at which the weight of the measurement sample is reduced by 10% when the weight of the measurement sample at the start of measurement is taken as 100%. Specifically, it can be measured according to the method described in Examples.

The nitrogen compound is a compound containing a nitrogen atom. From the viewpoint of stably and easily enhancing the marine degradability of the resin composition, the proportion of the nitrogen atom contained in the compound is preferably 10 to 60% by mass, more preferably 20 to 50% by mass, and still more preferably 25 to 40% by mass.

The molecular weight of the nitrogen compound is preferably 50 or more and 1000 or less, more preferably 60 or more and 500 or less, and still more preferably 60 or more and 150 or less.

The nitrogen compound can be a nutrient source for microorganisms that decompose the aliphatic polyester-based resin in the sea. By blending the nitrogen compound in the aliphatic polyester-based resin, a component derived from the nitrogen compound eluted from the resin composition can be a nutrient source for microorganisms when the resin composition containing the nitrogen compound flows out into the ocean. As a result, the resin is easily biodegraded even in the sea where the amount of the nitrogen source serving as a nutrient source for microorganisms is small.

As the nitrogen compound, an organic nitrogen compound can be preferably used, and an organic nitrogen compound having no hydroxy group can be more preferably used. The organic nitrogen compound is an organic compound containing a nitrogen atom. Examples of the organic nitrogen compound include an organic compound having an amide bond (-N-(C=O)-) and an organic compound having an amino group.

The organic nitrogen compound is preferably at least one selected from the group consisting of an organic compound having an amide bond (-N-(C=O)-) and an organic compound having an amino group, and more preferably an organic compound having an amide bond. The compound having an amide bond may have an amino group.

The organic compound having an amide bond is preferably at least one selected from the group consisting of oxamide represented by the following formula (1), 2-oxo-4-methyl-6-ureidohexahydropyrimidine (CDU, acetaldehyde condensed urea) represented by the following formula (2), and isobutylidene diurea (IBDU), more preferably at least one selected from the group consisting of oxamide and 2-oxo-4-methyl-6-ureidohexahydropyrimidine (CDU, acetaldehyde condensed urea), and still more preferably oxamide.

The nitrogen compound preferably contains at least one selected from the group consisting of oxamide, 2-oxo-4-methyl-6-ureidohexahydropyrimidine (CDU), and isobutylidene diurea (IBDU), more preferably contains at least one selected from the group consisting of oxamide and 2-oxo-4-methyl-6-ureidohexahydropyrimidine (CDU), and still more preferably contains oxamide.

In the nitrogen compound, the total of the proportion of oxamide and the proportion of 2-oxo-4-methyl-6-ureidohexahydropyrimidine (CDU) in the nitrogen compound is preferably 50% by mass or more, more preferably 60% by mass or more, still more preferably 80% by mass or more, and yet still more preferably 90% by mass or more. The proportion of oxamide in the nitrogen compound is more preferably 50% by mass or more, more preferably 60% by mass or more, still more preferably 80% by mass or more, and yet still more preferably 90% by mass or more.

The method for producing an aliphatic polyester-based resin composition of the present invention includes the following embodiment. The method for producing an aliphatic polyester-based resin composition is a method for producing an aliphatic polyester-based resin composition produced by heating and kneading an aliphatic polyester-based resin and a nitrogen compound, in which the nitrogen compound is at least one selected from the group consisting of oxamide, 2-oxo-4-methyl-6-ureidohexahydropyrimidine, and isobutylidene diurea.

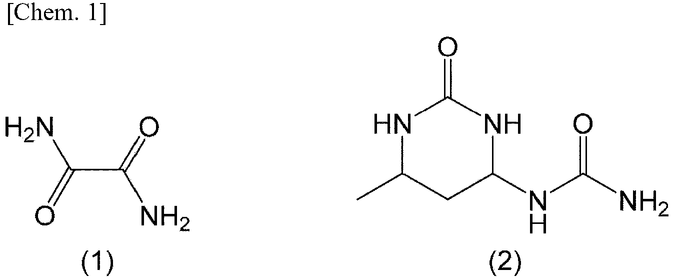

The oxamide represented by the formula (1) has a solubility in water at 20°C of 0.02 g/100 mL and a 10% weight reduction temperature determined by thermogravimetric analysis of 254°C.

2-Oxo-4-methyl-6-ureidohexahydropyrimidine (CDU) represented by the formula (2) has a solubility in water at 20°C of 0.08 g/100 mL, and a 10% weight reduction temperature determined by thermogravimetric analysis of 215°C.

Isobutylidene diurea (IBDU) has a solubility in water at 20°C of 0.09 g/100 mL and a 10% weight reduction temperature determined by thermogravimetric analysis of 206°C.

By using the compound having an amide bond, deterioration in physical properties due to heating and kneading can be suppressed, and a resin composition having excellent marine degradability and good durability against moisture can be stably obtained.

The blending amount of the nitrogen compound used in the present production method is preferably 1 part by mass or more and 50 parts by mass or less, more preferably 1 part by mass or more and 40 parts by mass or less, still more preferably 1 part by mass or more and 30 parts by mass or less, and yet still more preferably 2 parts by mass or more and 25 parts by mass or less with respect to 100 parts by mass of the aliphatic polyester-based resin.

When the blending amount of the nitrogen compound is within the above range, it is possible to obtain a resin composition having excellent marine degradability while suppressing deterioration in physical properties of the resin composition due to blending of the nitrogen compound, and in particular, the balance therebetween is excellent.

### <Phosphorus Compound>

The aliphatic polyester-based resin composition in the production method of the present invention preferably further contains a phosphorus compound.

Examples of the method for obtaining the aliphatic polyester-based resin composition containing the phosphorus compound include a method in which the phosphorus compound is blended at the same time when the aliphatic polyester-based resin and the nitrogen compound are heated and kneaded by an extruder or the like to form the composition, a method in which the nitrogen compound and the aliphatic polyester-based resin are heated and kneaded to form a kneaded product, and then the mixture and the phosphorus compound are heated and kneaded to form the composition, and a method in which the phosphorus compound and the aliphatic polyester-based resin are heated and kneaded to form a kneaded product, and then the kneaded product and the nitrogen compound are heated and kneaded to form the composition. From the viewpoint of enhancing productivity, it is preferable that the aliphatic polyester-based resin, the nitrogen compound, and the phosphorus compound are supplied to an extruder and heated and kneaded to produce an aliphatic polyester-based resin composition.

When the aliphatic polyester-based resin composition further contains a phosphorus compound, the decomposition efficiency of the resin by the nitrogen compound and the phosphorus compound can be enhanced. Therefore, when the nitrogen compound and the phosphorus compound are used in combination, the marine degradability of the resin composition can be further enhanced as compared with the case where the nitrogen compound is blended alone when the total amount of the nitrogen compound and the phosphorus compound to be blended is the same as the amount of the nitrogen compound alone. In addition, even when the total of the blending amount of the nitrogen compound and the blending amount of the phosphorus compound is relatively small, the marine degradability of the resin composition can be enhanced, so that a resin composition having good physical properties while having marine degradability can be obtained.

Note that some phosphorus compounds contain a nitrogen atom, but in the present invention, phosphorus compounds containing a nitrogen atom are treated as the nitrogen compound. That is, in the present invention, nitrogen compounds containing a phosphorus atom are included in the nitrogen compound.

In addition, the molecular weight of the phosphorus compound is preferably 60 or more and 1,000 or less, more preferably 80 or more and 500 or less, still more preferably 100 or more and 450 or less, yet still more preferably 150 or more and 400 or less, and yet still more preferably 200 or more and 400 or less.

The phosphorus compound can be a nutrient source for microorganisms that decompose the aliphatic polyester-based resin in the sea. By blending the phosphorus compound in the aliphatic polyester-based resin, a component derived from the phosphorus compound eluted from the resin composition can be a nutrient source for microorganisms when the resin composition containing the phosphorus compound flows out into the ocean. As a result, the resin is easily biodegraded even in the sea where the amount of the phosphorus source serving as a nutrient source for microorganisms is small.

As the phosphorus compound, a phosphorus compound having a solubility in water at 20°C of 100 g/100 mL or less, preferably a phosphorus compound having a solubility in water at 20°C of 30 g/100 mL or less can be used.

The solubility of the phosphorus compound in water at 20°C is preferably 50 mg/100 mL or less, more preferably 20 mg/100 mL or less, still more preferably 10 mg/100 mL or less, yet still more preferably 5 mg/100 mL or less, and yet still more preferably 3 mg/100 mL or less.

When the solubility of the phosphorus compound in water at 20°C is within the above range, it is easy to obtain a resin composition in which the marine degradability of the resin composition is enhanced and the deterioration in physical properties and the like are less likely to occur even when the resin composition is used under high humidity or immersed in water.

On the other hand, the solubility of the phosphorus compound in water at 20°C is preferably 0.01 mg/100 mL or more, and more preferably 0.1 mg/100 mL or more.

When the solubility of the phosphorus compound in water at 20°C is within the above range, the resin composition can stably exhibit marine degradability even in seawater having a low COD.

The solubility of the phosphorus compound in water at 20°C can be measured based on "Test No. 105: Water Solubility" of "OECD GUIDELINE FOR THE TESTING OF CHEMICALS" in the same manner as the solubility of the nitrogen compound in water at 20°C.

Examples of the phosphorus compound include organic phosphorus compounds and inorganic phosphorus compounds.

The organic phosphorus compound is preferably a phosphate ester, more preferably a phenol ester of phosphoric acid, and still more preferably triphenyl phosphate.

The inorganic phosphorus compound is preferably a phosphate, more preferably a calcium salt of phosphoric acid, and still more preferably tricalcium phosphate.

That is, the phosphorus compound preferably contains at least one selected from the group consisting of a phosphate ester and a phosphate. In addition, the phosphorus compound is more preferably at least one selected from the group consisting of a phosphate ester and a phosphate.

Further, the phosphorus compound more preferably contains at least one selected from the group consisting of a phenol ester of phosphoric acid and a calcium salt of phosphoric acid. The phosphorus compound still more preferably contains at least one selected from the group consisting of a phenol ester of phosphoric acid and a calcium salt of phosphoric acid.

The phosphorus compound yet still more preferably contains at least one selected from the group consisting of triphenyl phosphate and tricalcium phosphate. The total of the proportion of triphenyl phosphate and the proportion of tricalcium phosphate in the phosphorus compound is preferably 50% by mass or more, more preferably 60% by mass or more, still more preferably 80% by mass or more, and yet still more preferably 90% by mass or more.

Triphenyl phosphate has a solubility in water at 20°C of 1.1 mg/100 mL. Tricalcium phosphate has a solubility in water at 20°C of 2.2 mg/100 mL.

By using the phosphate ester and/or the phosphate, the decomposition efficiency of the resin by the nitrogen compound and the phosphorus compound can be enhanced, and a resin composition having good physical properties and good marine degradability can be stably obtained.

In addition, from the viewpoint of easily enhancing the marine degradability of the resin composition, the phosphorus compound is preferably an inorganic phosphorus compound and preferably a phosphate. Examples of the inorganic phosphorus compound include inorganic phosphorus compounds containing at least one selected from the group consisting of tricalcium phosphate, calcium pyrophosphate, calcium hydrogen phosphate, magnesium hydrogen phosphate, calcium hypophosphite, potassium dihydrogen phosphate, and ammonium dihydrogen phosphate. These inorganic phosphorus compounds include hydrates of the respective compounds.

The total of the blending amount of the nitrogen compound and the blending amount of the phosphorus compound used in the present production method is preferably 2 parts by mass or more and 60 parts by mass or less, more preferably 2 parts by mass or more and 50 parts by mass or less, still more preferably 5 parts by mass or more and 45 parts by mass or less, and yet still more preferably 10 parts by mass or more and 40 parts by mass or less with respect to 100 parts by mass of the aliphatic polyester-based resin.

When the total of the blending amount of the nitrogen compound and the content of the phosphorus compound is within the above range, it is possible to obtain a resin composition having excellent marine degradability while suppressing deterioration in physical properties of the resin composition due to blending of the nitrogen compound and the phosphorus compound, and in particular, the balance therebetween is excellent.

The ratio of the blending amount of the phosphorus compound to the blending amount of the nitrogen compound used in the present production method is preferably 0.5 to 1,000, more preferably 1 to 1,000, still more preferably 1 to 100, yet still more preferably 1 to 15, and yet still more preferably 1 to 5.

When the ratio of the blending amount of the phosphorus compound to the blending amount of the nitrogen compound is within the above range, it is easy to enhance the decomposition efficiency of the resin by the nitrogen compound and the phosphorus compound, and a resin composition exhibiting good marine degradability even in seawater having a low COD can be stably obtained.

From the viewpoint of easily enhancing the decomposition efficiency of the resin by the nitrogen compound and the phosphorus compound in the aliphatic polyester-based resin composition obtained by the present production method, the mass ratio of phosphorus atoms to nitrogen atoms in the aliphatic polyester-based resin composition is preferably 0.01 or more and 5 or less, more preferably 0.05 or more and 2 or less, and still more preferably 0.1 or more and 1 or less. Here, the nitrogen atom is a nitrogen atom substantially derived from a nitrogen compound, and the phosphorus atom is a phosphorus atom substantially derived from a nitrogen compound and/or a phosphorus compound. The mass ratio can be calculated, for example, from the relationship among the proportion of nitrogen atoms in the compound, the proportion of phosphorus atoms in the compound, and the blending amount of each compound, which are blended at the time of producing the resin composition, or can be calculated by measuring the amount of nitrogen atoms and the amount of phosphorus atoms contained in the resin composition and determining the ratio thereof.

### <Production Conditions>

The method for producing an aliphatic polyester-based resin composition of the present invention is a method in which an aliphatic polyester-based resin and a nitrogen compound are heated and kneaded, and preferably a method in which a phosphorus compound is further heated and kneaded in addition to the aliphatic polyester-based resin and the nitrogen compound.

The heating and kneading of the aliphatic polyester-based resin, the nitrogen compound, and the phosphorus compound to be blended as necessary can be performed using a kneader, an extruder, or the like, and is preferably performed using an extruder. In particular, by heating and kneading with an extruder, the nitrogen compound and the phosphorus compound can be efficiently dispersed in the aliphatic polyester-based resin, and productivity is excellent.

The extruder is not particularly limited, and a known extruder can be used.

The aliphatic polyester-based resin composition can be produced, for example, as follows. First, an aliphatic polyester-based resin, a nitrogen compound, a phosphorus compound to be blended as necessary, and the like are supplied to an extruder, and these are heated in the extruder and kneaded while melting the aliphatic polyester-based resin to form a melt-kneaded product. The temperature of the heating and kneading at this time is preferably 130°C or higher and 220°C or lower, and more preferably 150°C or higher and 210°C or lower.

Next, the melt-kneaded product is extruded into a string shape (strand shape) from the downstream side of the extruder, and the string-shaped melt-kneaded product is cooled (for example, water-cooled) and cut into a desired length using a pelletizer or the like, whereby an aliphatic polyester-based resin composition can be obtained. At this time, the aliphatic polyester-based resin composition is preferably granulated into a pellet shape. The obtained pellet-shaped aliphatic polyester-based resin composition can be used as a resin raw material for producing a molded article having a desired shape by, for example, thermoforming.

### <Characteristics of Aliphatic Polyester-Based Resin Composition Obtained by the Production Method>

Since the aliphatic polyester-based resin composition obtained by the method for producing an aliphatic polyester-based resin composition of the present invention is obtained by the above-mentioned method, the aliphatic polyester-based resin composition contains the above-mentioned nitrogen compound and further has the following characteristics.

The weight-average molecular weight of the aliphatic polyester-based resin constituting the aliphatic polyester-based resin composition is preferably 10,000 or more, more preferably 50,000 to 1,000,000, still more preferably 50,000 to 500,000, yet still more preferably 50,000 to 400,000, yet still more preferably 50,000 to 300,000, yet still more preferably 100,000 to 300,000, and yet still more preferably 150,000 to 300,000.

Since the weight-average molecular weight of the aliphatic polyester-based resin constituting the aliphatic polyester-based resin composition is within the above range, it is possible to obtain a resin composition having excellent marine degradability and good mechanical properties such as tensile properties.

The weight-average molecular weight of the aliphatic polyester-based resin constituting the aliphatic polyester-based resin composition can be measured by performing gel permeation chromatography analysis using an aliphatic polyester-based resin composition dissolved in chloroform as an analysis sample. Specifically, it can be measured according to the method described in Examples. Note that the weight-average molecular weight of the aliphatic polyester-based resin constituting the aliphatic polyester-based resin composition is a weight-average molecular weight in terms of polystyrene.

In the aliphatic polyester-based resin composition, the biodegradation degree of the aliphatic polyester-based resin composition after the aliphatic polyester-based resin composition is held in seawater having a COD of 1 mg/L or less for 28 days is preferably 1% or more, more preferably 2% or more, still more preferably 3% or more, and yet still more preferably 5% or more.

Here, the COD (chemical oxygen demand) indicates the amount of oxygen (mg/L) required when an oxidizable substance in sample water is oxidized under certain conditions, and serves as an index of water quality. In addition, the COD tends to increase as the amount of organic matter increases and the water quality deteriorates.

When the biodegradation degree of the aliphatic polyester-based resin composition after the aliphatic polyester-based resin composition is held in seawater having a COD of 1 mg/L or less for 28 days is within the above range, the resin composition can be sufficiently biodegraded even in the sea with less pollution and less organic matter serving as a nutrient source for microorganisms that decompose the aliphatic polyester-based resin.

The upper limit of the biodegradation degree of the aliphatic polyester-based resin composition after the aliphatic polyester-based resin composition is held in seawater having a COD of 1 mg/L or less for 28 days is not particularly limited as long as the object of the present invention can be achieved, but is preferably 90%, more preferably 70%, still more preferably 50%, yet still more preferably 40%, and yet still more preferably 30% from the viewpoint of enhancing the durability when a molded article formed from the resin composition is used in various applications.

The biodegradation degree of the aliphatic polyester-based resin composition after the aliphatic polyester-based resin composition is held in seawater having a COD of 1 mg/L or less for 28 days can be measured by the method described in Examples.

When the aliphatic polyester-based resin composition is allowed to stand in water at 23°C for 72 hours, the total amount of nitrogen contained per 1 mL of water is preferably 0.01 µg or more and 20 µg or less, more preferably 0.05 µg or more and 10 µg or less, still more preferably 0.1 µg or more and 5 µg or less, and yet still more preferably 0.1 µg or more and 2 µg or less per 1 g of the aliphatic polyester-based resin composition.

When the total amount of nitrogen contained per 1 mL of water when the aliphatic polyester-based resin composition is allowed to stand in water at 23°C for 72 hours is within the above range, it is possible to obtain a resin composition which is less likely to undergo an excessive deterioration in physical properties due to moisture and has excellent marine degradability.

The total amount of nitrogen contained per 1 mL of water when the aliphatic polyester-based resin composition is allowed to stand in water at 23°C for 72 hours can be calculated by measuring the total amount of nitrogen contained in an aqueous solution after the aliphatic polyester-based resin composition (test piece) is allowed to stand in pure water at 23°C for 72 hours based on JIS K 0102:2019 Section 45.6 (flow analysis method) and converting the unit. In the measurement, a film-shaped aliphatic polyester-based resin composition having a thickness of 1 mm and a volume of 100 mm³ or more is preferably used as a test piece. The measurement is performed by adding 4 to 6 g of the test piece per 100 mL of water into water. As long as the test piece has the above-described dimensions, one film-shaped material may be used, or a plurality of film-shaped materials may be used. Specifically, it can be measured according to the method described in Examples.

The total amount of nitrogen can also be said to be the total amount of nitrogen contained per 1 mL of water when the aliphatic polyester-based resin composition is immersed in water at 23°C for 72 hours at a proportion of 4 to 6 g of the aliphatic polyester-based resin composition per 100 mL of water.

In the aliphatic polyester-based resin composition, the 10% weight reduction temperature determined by thermogravimetric analysis is preferably 170°C or higher, more preferably 220°C or higher, still more preferably 240°C or higher, yet still more preferably 250°C or higher, and yet still more preferably 270°C or higher.

When the 10% weight reduction temperature of the resin composition determined by thermogravimetric analysis is within the above range, deterioration in physical properties of the resin composition due to thermoforming or the like can be stably suppressed. In addition, a resin composition capable of stably thermoforming a molded article having required physical properties can be obtained.

The upper limit of the 10% weight reduction temperature determined by thermogravimetric analysis is not particularly limited as long as the object of the present invention can be achieved, but is preferably 400°C or lower, more preferably 350°C or lower, and still more preferably 300°C or lower.

The 10% weight reduction temperature determined by thermogravimetric analysis is determined by heating a measurement sample composed of an aliphatic polyester-based resin composition under conditions of an air atmosphere and a heating rate of 10°C/min, and measuring the temperature at which the weight of the measurement sample is reduced by 10% when the weight of the measurement sample at the start of measurement is taken as 100%. Specifically, it can be measured according to the method described in Examples.

### [First Aliphatic Polyester-Based Resin Composition]

The first aliphatic polyester-based resin composition is an aliphatic polyester-based resin composition containing an aliphatic polyester-based resin and a nitrogen compound, and a solubility of the nitrogen compound in water at 20°C is 50 g/100 mL or less.

Therefore, the first aliphatic polyester-based resin composition is an aliphatic polyester-based resin composition containing an aliphatic polyester-based resin and a nitrogen compound, in which a solubility of the nitrogen compound in water at 20°C is 50 g/100 mL or less. The method for producing the first aliphatic polyester-based resin composition is not limited, but the composition is preferably obtained by the above-mentioned production method.

The first aliphatic polyester-based resin composition will be described below.

### <Aliphatic Polyester-Based Resin>

The first aliphatic polyester-based resin composition contains an aliphatic polyester-based resin as a main raw material constituting the composition.

Examples of the aliphatic polyester-based resin include a copolymer of a polyvalent fatty acid and an aliphatic polyol, a polymer of a fatty acid having a hydroxy group, and a polymer of lactone, a copolymer of a divalent fatty acid and an aliphatic diol, and a polymer of a fatty acid having a hydroxy group are preferable, and a polymer of a fatty acid having a hydroxy group is more preferable.

As the aliphatic polyester-based resin, a biodegradable aliphatic polyester-based resin having biodegradability is preferable.

Regarding the aliphatic polyester-based resin, the description of the aliphatic polyester-based resin described in the section of [Method for Producing Aliphatic Polyester-Based Resin Composition] can be referred to as appropriate.

The aliphatic polyester-based resin is preferably at least one selected from the group consisting of a polylactic acid-based resin, a polybutylene succinate-based resin, a polybutylene adipate-based resin, and a polyhydroxybutyrate-based resin.

From the viewpoint of a large supply amount to the market and excellent mechanical properties such as tensile properties, the aliphatic polyester-based resin is more preferably at least one selected from the group consisting of a polylactic acid-based resin, a polybutylene succinate-based resin, and a polybutylene adipate-based resin, and still more preferably a polylactic acid-based resin.

Regarding the weight-average molecular weight of the aliphatic polyester-based resin constituting the aliphatic polyester-based resin composition, the description of the aliphatic polyester-based resin described in the section of <Characteristics of Aliphatic Polyester-Based Resin Composition Obtained by the Production Method> can be referred to as appropriate.

The weight-average molecular weight of the aliphatic polyester-based resin is preferably 10,000 or more, more preferably 50,000 to 1,000,000, still more preferably 50,000 to 500,000, yet still more preferably 50,000 to 400,000, yet still more preferably 50,000 to 300,000, yet still more preferably 100,000 to 300,000, and yet still more preferably 150,000 to 300,000.

### <Nitrogen Compound>

The nitrogen compound contained in the first aliphatic polyester-based resin composition has a solubility in water at 20°C of 50 g/100 mL or less.

With respect to the properties of the nitrogen compound, such as the solubility in water at 20°C and the 10% weight reduction temperature determined by thermogravimetric analysis, the description of the nitrogen compound described in the section of [Method for Producing Aliphatic Polyester-Based Resin Composition] can be referred to as appropriate.

The nitrogen compound has a solubility in water at 20°C of 50 g/100 mL or less, and the solubility of the nitrogen compound in water at 20°C is preferably 30 g/100 mL or less, more preferably 10 g/100 mL or less, still more preferably 5 g/100 mL or less, yet still more preferably 1 g/100 mL or less, and yet still more preferably 0.5 g/100 mL or less.

When the solubility of the nitrogen compound in water at 20°C is within the above range, it is possible to obtain a resin composition that is less likely to be deformed or deteriorated in physical properties even when used under high humidity or immersed in water while having marine degradability.

On the other hand, the solubility of the nitrogen compound in water is preferably 0.001 g/100 mL or more, and more preferably 0.01 g/100 mL or more.

When the solubility of the nitrogen compound in water at 20°C is within the above range, the resin composition can stably exhibit marine degradability even in seawater having a low COD.

The nitrogen compound has a 10% weight reduction temperature determined by thermogravimetric analysis of preferably 200°C or higher, more preferably 210°C or higher, still more preferably 220°C or higher, yet still more preferably 230°C or higher, and yet still more preferably 240°C or higher.

When the 10% weight reduction temperature determined by thermogravimetric analysis is within the above range, it is possible to stably suppress deterioration in physical properties of the resin composition due to heat at the time of heating and kneading.

The upper limit of the 10% weight reduction temperature determined by thermogravimetric analysis is not particularly limited as long as the object of the present invention can be achieved, but is preferably 400°C or lower, more preferably 350°C or lower, and still more preferably 300°C or lower.

From the viewpoint of stably and easily enhancing the marine degradability of the resin composition, the proportion of the nitrogen atom contained in the nitrogen compound is preferably 10 to 60% by mass, more preferably 20 to 50% by mass, and still more preferably 25 to 40% by mass. The molecular weight of the nitrogen compound is preferably 50 or more and 1000 or less, and more preferably 60 or more and 500 or less.

The nitrogen compound is preferably an organic nitrogen compound.

The nitrogen compound is preferably at least one selected from the group consisting of oxamide, 2-oxo-4-methyl-6-ureidohexahydropyrimidine (CDU), and isobutylidene diurea (IBDU), more preferably contains at least one selected from the group consisting of oxamide and 2-oxo-4-methyl-6-ureidohexahydropyrimidine (CDU), and still more preferably contains oxamide.

The nitrogen compound is more preferably at least one selected from the group consisting of oxamide and 2-oxo-4-methyl-6-ureidohexahydropyrimidine (CDU), and still more preferably oxamide.

That is, the first aliphatic polyester-based resin composition is preferably an aliphatic polyester-based resin composition containing an aliphatic polyester-based resin and oxamide. The present invention also includes an aliphatic polyester-based resin composition containing an aliphatic polyester-based resin and oxamide.

By using the nitrogen compound, deterioration in physical properties due to heating and kneading can be suppressed, and a resin composition having excellent marine degradability and good durability against moisture can be stably obtained.

The first aliphatic polyester-based resin composition of the present invention includes the following embodiment. The aliphatic polyester-based resin composition is an aliphatic polyester-based resin composition containing an aliphatic polyester-based resin and a nitrogen compound, in which the nitrogen compound is at least one selected from the group consisting of oxamide, 2-oxo-4-methyl-6-ureidohexahydropyrimidine, and isobutylidene diurea.

The content of the nitrogen compound contained in the aliphatic polyester-based resin composition is preferably 1 part by mass or more and 50 parts by mass or less, more preferably 1 part by mass or more and 40 parts by mass or less, still more preferably 1 part by mass or more and 30 parts by mass or less, and yet still more preferably 2 parts by mass or more and 25 parts by mass or less with respect to 100 parts by mass of the aliphatic polyester-based resin.

When the content of the nitrogen compound is within the above range, it is possible to obtain a resin composition having excellent marine degradability while suppressing deterioration in physical properties of the resin composition due to blending of the nitrogen compound, and in particular, the balance therebetween is excellent.

### <Phosphorus Compound>

The first aliphatic polyester-based resin composition preferably further contains a phosphorus compound. When the first aliphatic polyester-based resin composition further contains a phosphorus compound, the decomposition efficiency of the resin by the nitrogen compound and the phosphorus compound can be enhanced. Therefore, when the nitrogen compound and the phosphorus compound are used in combination, the marine degradability of the resin composition can be further enhanced as compared with the case where the nitrogen compound is contained alone, provided that the total amount of the nitrogen compound and the phosphorus compound contained is the same as the amount of the nitrogen compound alone. In addition, even when the total content of the nitrogen compound and the phosphorus compound is relatively small, the marine degradability of the resin composition can be enhanced, so that a resin composition having good physical properties while having marine degradability can be obtained.

As described above, the nitrogen compound contained in the first aliphatic polyester-based resin composition is preferably oxamide. That is, the aliphatic polyester-based resin composition of the present invention preferably contains an aliphatic polyester-based resin and oxamide, and further contains a phosphorus compound.

With respect to the properties of the phosphorus compound, such as the solubility in water at 20°C, the description of the phosphorus compound described in the section of [Method for Producing Aliphatic Polyester-Based Resin Composition] can be referred to as appropriate.

As the phosphorus compound, a phosphorus compound having a solubility in water at 20°C of 100 g/100 mL or less, preferably a phosphorus compound having a solubility in water at 20°C of 30 g/100 mL or less can be used.

The solubility of the phosphorus compound in water at 20°C is preferably 50 mg/100 mL or less, more preferably 20 mg/100 mL or less, still more preferably 10 mg/100 mL or less, yet still more preferably 5 mg/100 mL or less, and yet still more preferably 3 mg/100 mL or less. When the solubility of the phosphorus compound in water at 20°C is within the above range, it is easy to obtain a resin composition in which the marine degradability of the resin composition is enhanced and the deterioration in physical properties and the like are less likely to occur even when the resin composition is used under high humidity or immersed in water.

On the other hand, the solubility of the phosphorus compound in water at 20°C is preferably 0.01 mg/100 mL or more, and more preferably 0.1 mg/100 mL or more.

When the solubility of the phosphorus compound in water at 20°C is within the above range, the resin composition can stably exhibit marine degradability even in seawater having a low COD.

In addition, the molecular weight of the phosphorus compound is preferably 60 or more and 1,000 or less, more preferably 80 or more and 500 or less, still more preferably 100 or more and 450 or less, yet still more preferably 150 or more and 400 or less, and yet still more preferably 200 or more and 400 or less.

Examples of the phosphorus compound include organic phosphorus compounds and inorganic phosphorus compounds.

The organic phosphorus compound is preferably a phosphate ester, more preferably a phenol ester of phosphoric acid, and still more preferably triphenyl phosphate.

The inorganic phosphorus compound is preferably a phosphate, more preferably a calcium salt of phosphoric acid, and still more preferably tricalcium phosphate.

By using the phosphate ester and/or the phosphate, the decomposition efficiency of the resin by the nitrogen compound and the phosphorus compound can be enhanced, and a resin composition having good physical properties and good marine degradability can be stably obtained.

In addition, from the viewpoint of easily enhancing the marine degradability of the resin composition, the phosphorus compound is preferably an inorganic phosphorus compound and preferably a phosphate. Examples of the inorganic phosphorus compound include inorganic phosphorus compounds containing at least one selected from the group consisting of tricalcium phosphate, calcium pyrophosphate, calcium hydrogen phosphate, magnesium hydrogen phosphate, calcium hypophosphite, potassium dihydrogen phosphate, and ammonium dihydrogen phosphate. These inorganic phosphorus compounds include hydrates of the respective compounds.

The total of the content of the nitrogen compound and the content of the phosphorus compound contained in the first aliphatic polyester-based resin composition is preferably 2 parts by mass or more and 60 parts by mass or less, more preferably 2 parts by mass or more and 50 parts by mass or less, still more preferably 5 parts by mass or more and 45 parts by mass or less, and yet still more preferably 10 parts by mass or more and 40 parts by mass or less with respect to 100 parts by mass of the aliphatic polyester-based resin.

When the total of the content of the nitrogen compound and the content of the phosphorus compound is within the above range, it is possible to obtain a resin composition having excellent marine degradability while suppressing deterioration in physical properties of the resin composition due to containing of the nitrogen compound and the phosphorus compound, and in particular, the balance therebetween is excellent.

The ratio of the content of the phosphorus compound to the content of the nitrogen compound contained in the first aliphatic polyester-based resin composition is preferably 0.5 to 1,000, more preferably 1 to 1,000, still more preferably 1 to 100, yet still more preferably 1 to 10, and yet still more preferably 1 to 5.

When the ratio of the content of the phosphorus compound to the content of the nitrogen compound is within the above range, it is easy to enhance the decomposition efficiency of the resin by the nitrogen compound and the phosphorus compound, and a resin composition exhibiting good marine degradability even in seawater having a low COD can be stably obtained.

From the viewpoint of easily enhancing the decomposition efficiency of the resin by the nitrogen compound and the phosphorus compound, the mass ratio of phosphorus atoms to nitrogen atoms in the aliphatic polyester-based resin composition is preferably 0.01 or more and 5 or less, more preferably 0.05 or more and 2 or less, and still more preferably 0.1 or more and 1 or less. Here, the nitrogen atom is a nitrogen atom substantially derived from a nitrogen compound, and the phosphorus atom is a phosphorus atom substantially derived from a nitrogen compound and/or a phosphorus compound. The mass ratio can be calculated, for example, from the relationship among the proportion of nitrogen atoms in the compound, the proportion of phosphorus atoms in the compound, and the blending amount of each compound, which are blended at the time of producing the resin composition, or can be calculated by measuring the amount of nitrogen atoms and the amount of phosphorus atoms contained in the resin composition and determining the ratio thereof.

### <Characteristics of Aliphatic Polyester-Based Resin Composition>

Regarding the characteristics of the first aliphatic polyester-based resin composition, the description in the section of <Characteristics of Aliphatic Polyester-Based Resin Composition Obtained by the Production Method> can be referred to as appropriate.

In the first aliphatic polyester-based resin composition, the biodegradation degree of the aliphatic polyester-based resin composition after the aliphatic polyester-based resin composition is held in seawater having a COD of 1 mg/L or less for 28 days is preferably 1% or more, more preferably 2% or more, still more preferably 3% or more, and yet still more preferably 5% or more.

The upper limit of the biodegradation degree of the aliphatic polyester-based resin composition after the aliphatic polyester-based resin composition is held in seawater having a COD of 1 mg/L or less for 28 days is not particularly limited as long as the object of the present invention can be achieved, but is preferably 90%, more preferably 70%, still more preferably 50%, yet still more preferably 40%, and yet still more preferably 30% from the viewpoint of enhancing the durability when a molded article formed from the resin composition is used in various applications.

When the first aliphatic polyester-based resin composition is allowed to stand in water at 23°C for 72 hours, the total amount of nitrogen contained per 1 mL of water is preferably 0.01 µg or more and 20 µg or less, more preferably 0.05 µg or more and 10 µg or less, still more preferably 0.1 µg or more and 5 µg or less, and yet still more preferably 0.1 µg or more and 2 µg or less per 1 g of the aliphatic polyester-based resin composition.

When the total amount of nitrogen contained per 1 mL of water when the aliphatic polyester-based resin composition is allowed to stand in water at 23°C for 72 hours is within the above range, it is possible to obtain a resin composition which is less likely to undergo an excessive deterioration in physical properties due to heat such as heating and kneading or the like and moisture and has excellent marine degradability.

In the aliphatic polyester-based resin composition, the 10% weight reduction temperature determined by thermogravimetric analysis is preferably 170°C or higher, more preferably 220°C or higher, still more preferably 240°C or higher, yet still more preferably 250°C or higher, and yet still more preferably 270°C or higher.

When the 10% weight reduction temperature of the resin composition determined by thermogravimetric analysis is within the above range, deterioration in physical properties of the resin composition due to thermoforming or the like can be stably suppressed. In addition, a resin composition capable of stably thermoforming a molded article having required physical properties can be obtained.

The upper limit of the 10% weight reduction temperature determined by thermogravimetric analysis is not particularly limited as long as the object of the present invention can be achieved, but is preferably 400°C or lower, more preferably 350°C or lower, and still more preferably 300°C or lower.

### [Second Aliphatic Polyester-Based Resin Composition]

The present invention also includes an aliphatic polyester-based resin composition containing an aliphatic polyester-based resin and a nitrogen compound, in which a total amount of nitrogen contained per 1 mL of water when the aliphatic polyester-based resin composition is allowed to stand in water at 23°C for 72 hours is 0.01 µg or more and 20 µg or less per 1 g of the aliphatic polyester-based resin composition.

Therefore, the aliphatic polyester-based resin composition of the present invention is an aliphatic polyester-based resin composition containing an aliphatic polyester-based resin and a nitrogen compound, in which a total amount of nitrogen contained per 1 mL of water when the aliphatic polyester-based resin composition is allowed to stand in water at 23°C for 72 hours is 0.01 µg or more and 20 µg or less per 1 g of the aliphatic polyester-based resin composition. The method for producing the aliphatic polyester-based resin composition of the present invention is not limited, but the composition is preferably obtained by the above-mentioned production method.

The above-mentioned aliphatic polyester-based resin composition is referred to as a second aliphatic polyester-based resin composition, and the second aliphatic polyester-based resin composition is described below.

### <Aliphatic Polyester-Based Resin>

The second aliphatic polyester-based resin composition contains an aliphatic polyester-based resin as a main raw material constituting the composition.

Examples of the aliphatic polyester-based resin include a copolymer of a polyvalent fatty acid and an aliphatic polyol, a polymer of a fatty acid having a hydroxy group, and a polymer of lactone, a copolymer of a divalent fatty acid and an aliphatic diol, and a polymer of a fatty acid having a hydroxy group are preferable, and a polymer of a fatty acid having a hydroxy group is more preferable.

As the aliphatic polyester-based resin, a biodegradable aliphatic polyester-based resin having biodegradability is preferable.

Regarding the aliphatic polyester-based resin, the description of the aliphatic polyester-based resin described in the section of [Method for Producing Aliphatic Polyester-Based Resin Composition] can be referred to as appropriate.

The aliphatic polyester-based resin is preferably at least one selected from the group consisting of a polylactic acid-based resin, a polybutylene succinate-based resin, a polybutylene adipate-based resin, and a polyhydroxybutyrate-based resin.

From the viewpoint of a large supply amount to the market and excellent mechanical properties such as tensile properties, the aliphatic polyester-based resin is more preferably at least one selected from the group consisting of a polylactic acid-based resin, a polybutylene succinate-based resin, and a polybutylene adipate-based resin, and still more preferably a polylactic acid-based resin.

Regarding the weight-average molecular weight of the aliphatic polyester-based resin constituting the aliphatic polyester-based resin composition, the description of the aliphatic polyester-based resin described in the section of <Characteristics of Aliphatic Polyester-Based Resin Composition Obtained by the Production Method> can be referred to as appropriate.

The weight-average molecular weight of the aliphatic polyester-based resin is preferably 10,000 or more, more preferably 50,000 to 1,000,000, still more preferably 50,000 to 500,000, yet still more preferably 50,000 to 400,000, yet still more preferably 50,000 to 300,000, yet still more preferably 100,000 to 300,000, and yet still more preferably 150,000 to 300,000.

<Nitrogen Compound>

The second aliphatic polyester-based resin composition contains a nitrogen compound. The nitrogen compound contained in the second aliphatic polyester-based resin composition is preferably a nitrogen compound having a solubility in water at 20°C of 50 g/100 mL or less. In addition, the nitrogen compound is preferably a nitrogen compound having a 10% weight reduction temperature determined by thermogravimetric analysis of 200°C or higher.

With respect to the properties of the nitrogen compound, such as the solubility in water at 20°C and the 10% weight reduction temperature determined by thermogravimetric analysis, the description of the nitrogen compound described in the section of [Method for Producing Aliphatic Polyester-Based Resin Composition] can be referred to as appropriate.

The solubility in water at 20°C of the nitrogen compound is preferably 50 g/100 mL or less, more preferably 30 g/100 mL or less, still more preferably 10 g/100 mL or less, yet still more preferably 5 g/100 mL or less, yet still more preferably 1 g/100 mL or less, and yet still more preferably 0.5 g/100 mL or less.

When the solubility of the nitrogen compound in water at 20°C is within the above range, it is possible to obtain a resin composition that is less likely to be deformed or deteriorated in physical properties even when used under high humidity or immersed in water while having marine degradability.

On the other hand, the solubility of the nitrogen compound in water is preferably 0.001 g/100 mL or more, and more preferably 0.01 g/100 mL or more.

When the solubility of the nitrogen compound in water at 20°C is within the above range, the resin composition can stably exhibit marine degradability even in seawater having a low COD.

The 10% weight reduction temperature determined by thermogravimetric analysis of the nitrogen compound is preferably 200°C or higher, more preferably 210°C or higher, still more preferably 220°C or higher, yet still more preferably 230°C or higher, and yet still more preferably 240°C or higher.

When the 10% weight reduction temperature determined by thermogravimetric analysis is within the above range, it is possible to stably suppress deterioration in physical properties of the resin composition due to heat at the time of heating and kneading.

The upper limit of the 10% weight reduction temperature determined by thermogravimetric analysis is not particularly limited as long as the object of the present invention can be achieved, but is preferably 400°C or lower, more preferably 350°C or lower, and still more preferably 300°C or lower.

From the viewpoint of stably and easily enhancing the marine degradability of the resin composition, the proportion of the nitrogen atom contained in the nitrogen compound is preferably 10 to 60% by mass, more preferably 20 to 50% by mass, and still more preferably 25 to 40% by mass. The molecular weight of the nitrogen compound is preferably 50 or more and 1000 or less, and more preferably 60 or more and 500 or less.

The nitrogen compound is preferably an organic nitrogen compound.

The nitrogen compound is preferably at least one selected from the group consisting of oxamide, 2-oxo-4-methyl-6-ureidohexahydropyrimidine (CDU, acetaldehyde condensed urea), and isobutylidene diurea (IBDU), more preferably contains at least one selected from the group consisting of oxamide and 2-oxo-4-methyl-6-ureidohexahydropyrimidine (CDU), and still more preferably contains oxamide.

The nitrogen compound is more preferably at least one selected from the group consisting of oxamide and 2-oxo-4-methyl-6-ureidohexahydropyrimidine (CDU), and still more preferably oxamide.

By using the nitrogen compound, deterioration in physical properties due to heating and kneading can be suppressed, and a resin composition having excellent marine degradability and good durability against moisture can be stably obtained.

The content of the nitrogen compound contained in the aliphatic polyester-based resin composition is preferably 1 part by mass or more and 50 parts by mass or less, more preferably 1 part by mass or more and 40 parts by mass or less, still more preferably 1 part by mass or more and 30 parts by mass or less, and yet still more preferably 2 parts by mass or more and 25 parts by mass or less with respect to 100 parts by mass of the aliphatic polyester-based resin.

When the content of the nitrogen compound is within the above range, it is possible to obtain a resin composition having excellent marine degradability while suppressing deterioration in physical properties of the resin composition due to blending of the nitrogen compound, and in particular, the balance therebetween is excellent.

### <Phosphorus Compound>

The second aliphatic polyester-based resin composition preferably further contains a phosphorus compound.

When the second aliphatic polyester-based resin composition further contains a phosphorus compound, the decomposition efficiency of the resin by the nitrogen compound and the phosphorus compound can be enhanced. Therefore, when the nitrogen compound and the phosphorus compound are used in combination, the marine degradability of the resin composition can be further enhanced as compared with the case where the nitrogen compound is contained alone, provided that the total amount of the nitrogen compound and the phosphorus compound contained is the same as the amount of the nitrogen compound alone. In addition, even when the total content of the nitrogen compound and the phosphorus compound is relatively small, the marine degradability of the resin composition can be enhanced, so that a resin composition having good physical properties while having marine degradability can be obtained.

With respect to the properties of the phosphorus compound, such as the solubility in water at 20°C, the description of the phosphorus compound described in the section of [Method for Producing Aliphatic Polyester-Based Resin Composition] can be referred to as appropriate.

As the phosphorus compound, a phosphorus compound having a solubility in water at 20°C of 100 g/100 mL or less, preferably a phosphorus compound having a solubility in water at 20°C of 30 g/100 mL or less can be used.

The solubility of the phosphorus compound in water at 20°C is preferably 50 mg/100 mL or less, more preferably 20 mg/100 mL or less, still more preferably 10 mg/100 mL or less, yet still more preferably 5 mg/100 mL or less, and yet still more preferably 3 mg/100 mL or less.

When the solubility of the phosphorus compound in water at 20°C is within the above range, it is easy to obtain a resin composition in which the marine degradability of the resin composition is enhanced and the deterioration in physical properties and the like are less likely to occur even when the resin composition is used under high humidity or immersed in water.

On the other hand, the solubility of the phosphorus compound in water at 20°C is preferably 0.01 mg/100 mL or more, and more preferably 0.1 mg/100 mL or more.

When the solubility of the phosphorus compound in water at 20°C is within the above range, the resin composition can stably exhibit marine degradability even in seawater having a low COD.

In addition, the molecular weight of the phosphorus compound is preferably 60 or more and 1,000 or less, more preferably 80 or more and 500 or less, still more preferably 100 or more and 450 or less, yet still more preferably 150 or more and 400 or less, and yet still more preferably 200 or more and 400 or less.

Examples of the phosphorus compound include organic phosphorus compounds and inorganic phosphorus compounds.

The organic phosphorus compound is preferably a phosphate ester, more preferably a phenol ester of phosphoric acid, and still more preferably triphenyl phosphate.

The inorganic phosphorus compound is preferably a phosphate, more preferably a calcium salt of phosphoric acid, and still more preferably tricalcium phosphate.

By using the phosphate ester and/or the phosphate, the decomposition efficiency of the resin by the nitrogen compound and the phosphorus compound can be enhanced, and a resin composition having good physical properties and good marine degradability can be stably obtained.

In addition, from the viewpoint of easily enhancing the marine degradability of the resin composition, the phosphorus compound is preferably an inorganic phosphorus compound and preferably a phosphate. Examples of the inorganic phosphorus compound include inorganic phosphorus compounds containing at least one selected from the group consisting of tricalcium phosphate, calcium pyrophosphate, calcium hydrogen phosphate, magnesium hydrogen phosphate, calcium hypophosphite, potassium dihydrogen phosphate, and ammonium dihydrogen phosphate. These inorganic phosphorus compounds include hydrates of the respective compounds.

The total of the content of the nitrogen compound and the content of the phosphorus compound contained in the second aliphatic polyester-based resin composition is preferably 2 parts by mass or more and 60 parts by mass or less, more preferably 2 parts by mass or more and 50 parts by mass or less, still more preferably 5 parts by mass or more and 45 parts by mass or less, and yet still more preferably 10 parts by mass or more and 40 parts by mass or less with respect to 100 parts by mass of the aliphatic polyester-based resin.

When the total of the content of the nitrogen compound and the content of the phosphorus compound is within the above range, it is possible to obtain a resin composition having excellent marine degradability while suppressing deterioration in physical properties of the resin composition due to containing of the nitrogen compound and the phosphorus compound, and in particular, the balance therebetween is excellent.

The ratio of the content of the phosphorus compound to the content of the nitrogen compound contained in the second aliphatic polyester-based resin composition is preferably 0.5 to 1,000, more preferably 1 to 1,000, still more preferably 1 to 100, yet still more preferably 1 to 10, and yet still more preferably 1 to 5.

When the ratio of the content of the phosphorus compound to the content of the nitrogen compound is within the above range, it is easy to enhance the decomposition efficiency of the resin by the nitrogen compound and the phosphorus compound, and a resin composition exhibiting good marine degradability even in seawater having a low COD can be stably obtained.

From the viewpoint of easily enhancing the decomposition efficiency of the resin by the nitrogen compound and the phosphorus compound, the mass ratio of phosphorus atoms to nitrogen atoms in the aliphatic polyester-based resin composition is preferably 0.01 or more and 5 or less, more preferably 0.05 or more and 2 or less, and still more preferably 0.1 or more and 1 or less. Here, the nitrogen atom is a nitrogen atom substantially derived from a nitrogen compound, and the phosphorus atom is a phosphorus atom substantially derived from a nitrogen compound and/or a phosphorus compound. The mass ratio can be calculated, for example, from the relationship among the proportion of nitrogen atoms in the compound, the proportion of phosphorus atoms in the compound, and the blending amount of each compound, which are blended at the time of producing the resin composition, or can be calculated by measuring the amount of nitrogen atoms and the amount of phosphorus atoms contained in the resin composition and determining the ratio thereof.

### <Characteristics of Aliphatic Polyester-Based Resin Composition>

Regarding the characteristics of the second aliphatic polyester-based resin composition, the description in the section of <Characteristics of Aliphatic Polyester-Based Resin Composition Obtained by the Production Method> can be referred to as appropriate.

When the second aliphatic polyester-based resin composition is allowed to stand in water at 23°C for 72 hours, the total amount of nitrogen contained per 1 mL of water is 0.01 µg or more and 20 µg or less, preferably 0.05 µg or more and 10 µg or less, more preferably 0.1 µg or more and 5 µg or less, and still more preferably 0.1 µg or more and 2 µg or less per 1 g of the aliphatic polyester-based resin composition.

When the total amount of nitrogen contained per 1 mL of water when the aliphatic polyester-based resin composition is allowed to stand in water at 23°C for 72 hours is within the above range, it is possible to obtain a resin composition which is less likely to undergo an excessive deterioration in physical properties due to heat such as heating and kneading or the like and moisture and has excellent marine degradability.

In the second aliphatic polyester-based resin composition, the biodegradation degree of the aliphatic polyester-based resin composition after the aliphatic polyester-based resin composition is held in seawater having a COD of 1 mg/L or less for 28 days is preferably 1% or more, more preferably 2% or more, still more preferably 3% or more, and yet still more preferably 5% or more.

The upper limit of the biodegradation degree of the aliphatic polyester-based resin composition after the aliphatic polyester-based resin composition is held in seawater having a COD of 1 mg/L or less for 28 days is not particularly limited as long as the object of the present invention can be achieved, but is preferably 90%, more preferably 70%, still more preferably 50%, yet still more preferably 40%, and yet still more preferably 30% from the viewpoint of enhancing the durability when a molded article formed from the resin composition is used in various applications.

In the second aliphatic polyester-based resin composition, the 10% weight reduction temperature determined by thermogravimetric analysis is preferably 170°C or higher, more preferably 220°C or higher, still more preferably 240°C or higher, yet still more preferably 250°C or higher, and yet still more preferably 270°C or higher.

When the 10% weight reduction temperature of the resin composition determined by thermogravimetric analysis is within the above range, deterioration in physical properties of the resin composition due to thermoforming or the like can be stably suppressed. In addition, a resin composition capable of stably thermoforming a molded article having required physical properties can be obtained.

The upper limit of the 10% weight reduction temperature determined by thermogravimetric analysis is not particularly limited as long as the object of the present invention can be achieved, but is preferably 400°C or lower, more preferably 350°C or lower, and still more preferably 300°C or lower.

### [Marine Degradation Promoter]

In order to obtain the aliphatic polyester-based resin composition of the present invention, it is possible to use, as a marine degradation promoter for an aliphatic polyester-based resin, a marine degradation promoter which contains the above-mentioned nitrogen compound and in which a solubility of the nitrogen compound in water at 20°C is 50 g/100 mL or less.

That is, the marine degradation promoter of the present invention is a marine degradation promoter used for obtaining an aliphatic polyester-based resin composition containing an aliphatic polyester-based resin and a nitrogen compound, in which the marine degradation promoter contains the nitrogen compound, and a solubility of the nitrogen compound in water at 20°C is 50 g/100 mL or less.

### <Nitrogen Compound>

The nitrogen compound contained in the marine degradation promoter of the present invention has a solubility in water at 20°C of 50 g/100 mL or less.

With respect to the properties of the nitrogen compound, such as the solubility in water at 20°C and the 10% weight reduction temperature determined by thermogravimetric analysis, the description of the nitrogen compound described in the section of [Method for Producing Aliphatic Polyester-Based Resin Composition] can be referred to as appropriate.

The nitrogen compound has a solubility in water at 20°C of 50 g/100 mL or less, and the solubility of the nitrogen compound in water at 20°C is preferably 30 g/100 mL or less, more preferably 10 g/100 mL or less, still more preferably 5 g/100 mL or less, yet still more preferably 1 g/100 mL or less, and yet still more preferably 0.5 g/100 mL or less.

When the solubility of the nitrogen compound in water at 20°C is within the above range, it is possible to obtain a resin composition that is less likely to be deformed or deteriorated in physical properties even when used under high humidity or immersed in water while having marine degradability. On the other hand, the solubility of the nitrogen compound in water is preferably 0.001 g/100 mL or more, and more preferably 0.01 g/100 mL or more.

When the solubility of the nitrogen compound in water at 20°C is within the above range, the resin composition can stably exhibit marine degradability even in seawater having a low COD.

Note that the solubility in water at 20°C can be measured based on "Test No. 105: Water Solubility" of "OECD GUIDELINE FOR THE TESTING OF CHEMICALS".

The nitrogen compound has a 10% weight reduction temperature determined by thermogravimetric analysis of preferably 200°C or higher, more preferably 210°C or higher, still more preferably 220°C or higher, yet still more preferably 230°C or higher, and yet still more preferably 240°C or higher.

When the 10% weight reduction temperature determined by thermogravimetric analysis is within the above range, it is possible to stably suppress deterioration in physical properties of the resin composition due to heat at the time of heating and kneading.

The upper limit of the 10% weight reduction temperature determined by thermogravimetric analysis is not particularly limited as long as the object of the present invention can be achieved, but is preferably 400°C or lower, more preferably 350°C or lower, and still more preferably 300°C or lower.

From the viewpoint of stably and easily enhancing the marine degradability of the resin composition, the proportion of the nitrogen atom contained in the nitrogen compound is preferably 10 to 60% by mass, more preferably 20 to 50% by mass, and still more preferably 25 to 40% by mass. The molecular weight of the nitrogen compound is preferably 50 or more and 1000 or less, and more preferably 60 or more and 500 or less.

The nitrogen compound is preferably an organic nitrogen compound. The nitrogen compound is more preferably at least one selected from the group consisting of oxamide and 2-oxo-4-methyl-6-ureidohexahydropyrimidine (CDU), and still more preferably oxamide.

That is, the marine degradation promoter of the present invention preferably contains oxamide as the nitrogen compound.

In a case where the marine degradation promoter contains oxamide, the proportion of oxamide in the nitrogen compound is 50% by mass or more, more preferably 60% by mass or more, still more preferably 80% by mass or more, and yet still more preferably 90% by mass or more.

The marine degradation promoter of the present invention includes the following embodiment. The marine degradation promoter is a marine degradation promoter used for obtaining an aliphatic polyester-based resin composition containing an aliphatic polyester-based resin and a nitrogen compound, in which the marine degradation promoter contains the nitrogen compound, and the nitrogen compound is at least one selected from the group consisting of oxamide, 2-oxo-4-methyl-6-ureidohexahydropyrimidine, and isobutylidene diurea.

### <Phosphorus Compound>

The marine degradation promoter of the present invention preferably further contains a phosphorus compound.

Since the marine degradation promoter of the present invention further contains a phosphorus compound, the decomposition efficiency of the resin by the marine degradation promoter can be enhanced. Therefore, the marine degradability of the resin composition can be further enhanced as compared with the case where the same amount of the nitrogen compound is blended alone as the marine degradation promoter. In addition, even in a case where the total blending amount of the marine degradation promoter is relatively small, the marine degradability of the resin composition can be enhanced, and thus a resin composition having good physical properties while having marine degradability can be obtained.

As described above, the nitrogen compound contained in the marine degradation promoter of the present invention is preferably oxamide. That is, the marine degradation promoter of the present invention preferably contains oxamide as the nitrogen compound, and further contains a phosphorus compound.

With respect to the type of the phosphorus compound and the properties of the phosphorus compound, such as the solubility in water at 20°C, the description of the phosphorus compound described in the section of [Method for Producing Aliphatic Polyester-Based Resin Composition] can be referred to as appropriate.

As the phosphorus compound, a phosphorus compound having a solubility in water at 20°C of 100 g/100 mL or less, preferably a phosphorus compound having a solubility in water at 20°C of 30 g/100 mL or less can be used.

The solubility of the phosphorus compound in water at 20°C is preferably 50 mg/100 mL or less, more preferably 20 mg/100 mL or less, still more preferably 10 mg/100 mL or less, yet still more preferably 5 mg/100 mL or less, and yet still more preferably 3 mg/100 mL or less. When the solubility of the phosphorus compound in water at 20°C is within the above range, it is easy to obtain a resin composition in which the marine degradability of the resin composition is enhanced and the deterioration in physical properties and the like are less likely to occur even when the resin composition is used under high humidity or immersed in water.

On the other hand, the solubility of the phosphorus compound in water at 20°C is preferably 0.01 mg/100 mL or more, and more preferably 0.1 mg/100 mL or more.

When the solubility of the phosphorus compound in water at 20°C is within the above range, the resin composition can stably exhibit marine degradability even in seawater having a low COD.

Examples of the phosphorus compound include organic phosphorus compounds and inorganic phosphorus compounds. The molecular weight of the phosphorus compound is preferably 60 or more and 1000 or less, and more preferably 80 or more and 500 or less.

The organic phosphorus compound is preferably a phosphate ester, more preferably a phenol ester of phosphoric acid, and still more preferably triphenyl phosphate.

The inorganic phosphorus compound is preferably a phosphate, more preferably a calcium salt of phosphoric acid, and still more preferably tricalcium phosphate.

The phosphorus compound more preferably contains at least one selected from the group consisting of triphenyl phosphate and tricalcium phosphate. In this case, the proportion of the at least one phosphorus compound selected from the group consisting of triphenyl phosphate and tricalcium phosphate in the phosphorus compound is 50% by mass or more, more preferably 60% by mass or more, still more preferably 80% by mass or more, and yet still more preferably 90% by mass or more.

By using the phosphate ester and/or the phosphate, the decomposition efficiency of the resin by the marine degradation promoter can be enhanced, and a resin composition having good physical properties and good marine degradability can be stably obtained.

In addition, from the viewpoint of easily enhancing the marine degradability of the resin composition, the phosphorus compound is preferably an inorganic phosphorus compound and preferably a phosphate. Examples of the inorganic phosphorus compound include inorganic phosphorus compounds containing at least one selected from the group consisting of tricalcium phosphate, calcium pyrophosphate, calcium hydrogen phosphate, magnesium hydrogen phosphate, calcium hypophosphite, potassium dihydrogen phosphate, and ammonium dihydrogen phosphate. These inorganic phosphorus compounds include hydrates of the respective compounds.

The ratio of the content of the phosphorus compound to the content of the nitrogen compound contained in the marine degradation promoter of the present invention is preferably 0.5 to 1,000, more preferably 1 to 1,000, still more preferably 1 to 100, yet still more preferably 1 to 10, and yet still more preferably 1 to 5.

When the ratio of the content of the phosphorus compound to the content of the nitrogen compound is within the above range, it is easy to enhance the decomposition efficiency of the resin by the marine degradation promoter, and a resin composition exhibiting good marine degradability even in seawater having a low COD can be stably obtained.

From the viewpoint of easily enhancing the decomposition efficiency of the resin by the marine degradation promoter, the mass ratio of phosphorus atoms to nitrogen atoms in the marine degradation promoter is preferably 0.01 or more and 5 or less, more preferably 0.05 or more and 2 or less, and still more preferably 0.1 or more and 1 or less.

Here, the nitrogen atom is a nitrogen atom contained in a nitrogen compound, and the phosphorus atom is a phosphorus atom contained in a nitrogen compound and/or a phosphorus compound. The mass ratio can be calculated from the relationship among the proportion of nitrogen atoms in the compound, the proportion of phosphorus atoms in the compound, and the blending amount (content) of each compound. For example, when a nitrogen compound containing a phosphorus atom is blended, the mass ratio can be determined by dividing the total mass of phosphorus atoms in the nitrogen compound by the total mass of nitrogen atoms in the nitrogen compound. In addition, when a nitrogen compound and a phosphorus compound are used in combination, the mass ratio can be determined by dividing the sum of the product of the proportion of phosphorus atoms in the phosphorus compound and the blending amount of the phosphorus compound and the product of the proportion of phosphorus atoms in the nitrogen compound and the blending amount of the nitrogen compound by the product of the proportion of nitrogen atoms in the nitrogen compound and the blending amount of the nitrogen compound.

### <Characteristics of Marine Degradation Promoter>

The shape of the marine degradation promoter of the present invention is not particularly limited as long as it contains the nitrogen compound and can form an aliphatic polyester-based resin composition by kneading or the like with an aliphatic polyester-based resin. From the viewpoint of enhancing the handleability, the marine degradation promoter is preferably a particulate material. In addition, when the marine degradation promoter is a particulate material, the average diameter thereof is preferably 0.1 mm or more and 10 mm or less, and more preferably 0.2 mm or more and 5 mm or less.

The average diameter means a particle diameter (D50) at a volume integration value of 50% in a particle size distribution measured by measuring a particle size distribution of a particulate material using a particle size distribution measuring apparatus. As the particle size distribution measuring apparatus, for example, "Millitrac JPA" manufactured by NIKKISO CO., LTD. can be used.

In addition, the marine degradation promoter of the present invention may be composed of the nitrogen compound, or may be composed of a mixture of the nitrogen compound and the phosphorus compound. In addition, the marine degradation promoter may contain an excipient, a binder, or the like for maintaining the shape in addition to the nitrogen compound and the phosphorus compound. Such marine degradation promoter can also be used as a masterbatch used for promoting the marine degradation of the resin.

From the viewpoint of enhancing the decomposition efficiency of the resin, the total of the content of the nitrogen compound and the content of the phosphorus compound in the marine degradation promoter is preferably 50% by mass or more, more preferably 60% by mass or more, still more preferably 80% by mass or more, and yet still more preferably 90% by mass or more.

### <Method for Obtaining Aliphatic Polyester-Based Resin Composition>

The marine degradation promoter of the present invention can be used as a marine degradation promoter for an aliphatic polyester-based resin. Specifically, an aliphatic polyester-based resin composition containing an aliphatic polyester-based resin and a nitrogen compound can be obtained by blending the marine degradation promoter of the present invention into an aliphatic polyester-based resin.

As a method for obtaining an aliphatic polyester-based resin composition using the marine degradation promoter of the present invention, for example, the method for producing an aliphatic polyester-based resin composition described in the section of <Production Conditions> of [Method for Producing Aliphatic Polyester-Based Resin Composition] can be adopted. Alternatively, the aliphatic polyester-based resin composition may be formed by forming the aliphatic polyester-based resin into a fibrous material or a film-shaped material and then impregnating the fibrous material or the film-shaped material with the marine degradation promoter.

Regarding the aliphatic polyester-based resin used for obtaining the aliphatic polyester-based resin composition, the blending amount of the nitrogen compound in the aliphatic polyester-based resin, and the like, various descriptions described in the section of [Method for Producing Aliphatic Polyester-Based Resin Composition] can be referred to as appropriate.

### EXAMPLES

Next, the present invention will be described in more detail by Examples, but the present invention is not limited in any way by these Examples.

### [Measurements and Evaluations]

### <Solubility of Nitrogen Compound and Phosphorus Compound in Water at 20°C>

As the solubility of the nitrogen compound and the phosphorus compound in water at 20°C, a value measured based on "Test No. 105: Water Solubility" of "OECD GUIDELINE FOR THE TESTING OF CHEMICALS" was adopted.

### <10% Weight Reduction Temperature Determined by Thermogravimetric Analysis>

The 10% weight reduction temperature of the nitrogen compound or the polyester-based resin composition determined by thermogravimetric analysis was measured as follows.

As a measuring apparatus, TMA7100 manufactured by Hitachi High-Tech Analysis Corporation was prepared. 10 mg of a measurement sample composed of a nitrogen compound or a polyester-based resin composition was set in the measuring apparatus, and the measurement sample was heated from 25°C to 600°C in an air atmosphere. The heating rate at this time was 10/min. Assuming the weight of the measurement sample at the start of measurement as 100%, the temperature at which the weight of the measurement sample is reduced by 10% is obtained and defined as the 10% weight reduction temperature.

### <Biodegradation Degree>

A BOD (biochemical oxygen demand) test was carried out at 27°C for 28 days using the aliphatic polyester-based resin composition or the aliphatic polyester-based resin obtained in each of Examples and Comparative Examples.

The BOD test was performed as follows. First, a BOD sensor manufactured by VELP Scientifica was prepared as a measuring apparatus. Seawater from Nakagusuku Bay, Uruma City, Okinawa was prepared as seawater having a COD of 1 mg/L or less. It should be noted that the COD of seawater in Nakagusuku Bay is 0.6 mg/L on the mean according to "Water Quality Survey Results (before Opening) of Bathing Area in 2023" published by Environmental Management Bureau, the Ministry of the Environment.

40 mg of a powdery test sample obtained by freezing and pulverizing the aliphatic polyester-based resin composition or the aliphatic polyester-based resin so as to have a maximum particle size of 250 µm or less and 250 mg of seawater were placed in a culture bottle (transparent glass bottle). The culture bottle was incubated in a constant temperature bath (27°C), and BOD measurement was carried out for 28 days while stirring.

Using the measured values of BOD and the like, the biodegradation degree was calculated by the following equation.$Biodegradation degree \left(%\right) = BOD / theoretical oxygen demand \left(ThOD\right) \times 100$

A larger value of biodegradation degree means that biodegradation is more likely to occur even in an ocean with a low COD.

In addition, BOD (biochemical oxygen demand) means a mass concentration of dissolved oxygen consumed by a chemical substance or organic matter by aerobic biological oxidation in water under a specific condition. In the method using the above-described measuring apparatus, the BOD can be calculated by measuring, with a pressure sensor, a pressure change in the culture bottle which is caused by absorbing, by an absorbent (NaOH), carbon dioxide emitted in association with consumption of oxygen by microorganisms in seawater.

Theoretical Oxygen Demand (ThOD) means the maximum theoretical oxygen demand calculated from the molecular formula required for a chemical substance to be completely oxidized. For example, in a case where the composition ratio of the monomer unit of the aliphatic polyester-based resin is CₐH_{b}O_{c}, ThOD is the amount of oxygen when C and H are completely converted into CO₂ and H₂O, and can be calculated by the following equation. $ThOD \left(mL\right) = 32 / M \times \left(4a+b+4d-2c\right) / 4 \times w \times 4$
w: Weight of chemical substance (mg)
M: Molecular weight of chemical substance
a: Number of carbon atoms in chemical substance
b: Number of hydrogen atoms in chemical substance
c: Number of oxygen atoms in chemical substance
d: Number of nitrogen atoms in chemical substance

In addition, in an aliphatic polyester-based resin composition containing a nitrogen compound or the like, the ThOD of the aliphatic polyester-based resin composition was calculated from the relationship between the ThOD and the blending amount of the aliphatic polyester-based resin and the ThOD and the blending amount of the nitrogen compound or the like similarly calculated by the above equation. In the test resin (aliphatic polyester-based resin composition) of Example 1, since the ThOD of 100 parts by mass of PLA was 186 mgO₂ and the ThOD of 15 parts by mass of oxamide was 2 mgO₂, the ThOD of the test resin of Example 1 was set to 188 mgO₂. The same calculation was performed for the test resins (aliphatic polyester-based resin compositions) of other Examples and Comparative Examples.

### <Total Amount of Nitrogen per 1 g of Aliphatic Polyester-Based Resin Composition, Contained per 1 mL of Water When Aliphatic Polyester-Based Resin Composition is Allowed to Stand in Water at 23°C for 72 Hours>

The aliphatic polyester-based resin composition or aliphatic polyester-based resin obtained in each of Examples and Comparative Examples was molded to obtain a film having a thickness of 1 mm. The obtained film was cut into a size of 10 mm in length and 10 mm in width to obtain a test piece for measuring the total amount of nitrogen.

A plurality of test pieces of about 13 g in total were placed in pure water of 300 mL and allowed to stand at 23°C for 72 hours. Thereafter, the test pieces were removed by filtration, and the total nitrogen measurement was performed on the obtained test liquid (water) of 300 mL based on JIS K 0102:2019 Section 45.6 (flow analysis method). From the measurement result, the total amount of nitrogen (µg) per 1 g of the test piece (aliphatic polyester-based resin composition) contained per 1 mL of the test liquid (water) was calculated. In Tables 3 and 4, "the total amount of nitrogen (µg) per 1 g of the aliphatic polyester-based resin composition contained per 1 mL of water when the aliphatic polyester-based resin composition is allowed to stand in water at 23°C for 72 hours", that is, "the total amount of nitrogen (µg) per 1 g of the aliphatic polyester-based resin composition contained per 1 mL of water when the aliphatic polyester-based resin composition is immersed in water at 23°C for 72 hours at a proportion of 4 to 6 g of the aliphatic polyester-based resin composition per 100 mL of water" was described as "total amount of nitrogen (µg)".

### <Weight-Average Molecular Weight (Mw)>

The weight-average molecular weight (Mw) of the aliphatic polyester-based resin constituting the aliphatic polyester-based resin composition obtained in each of Examples and Comparative Examples and the weight-average molecular weight (Mw) of the aliphatic polyester-based resin as a raw material resin were measured as follows.

As a pre-treatment, 30 mg of the aliphatic polyester-based resin composition or the aliphatic polyester-based resin was dissolved in 20 mL of chloroform to obtain a solution. The solution was filtered through a syringe filter having a pore size of 0.45 µm, and the obtained filtrate was used as an analysis sample. The analysis sample was analyzed by gel permeation chromatography under the following conditions to measure the weight-average molecular weight (Mw) of the aliphatic polyester-based resin constituting the aliphatic polyester-based resin composition and the weight-average molecular weight (Mw) of the aliphatic polyester-based resin used as the raw material resin.

In Tables 3 and 4, the "raw material resin Mw" is the "weight-average molecular weight (Mw) of the aliphatic polyester-based resin as the raw material resin", and the "resin composition Mw" is the "weight-average molecular weight (Mw) of the polyester-based resin constituting the aliphatic polyester-based resin composition obtained in each of Examples and Comparative Examples".

Measuring apparatus: 2695 manufactured by Nihon Waters K.K.
Column: TSKgel G5000HHR manufactured by Tosoh Corporation and TSKgel G3000HHR manufactured by Tosoh Corporation were connected in series in this order and used.
Column temperature: 40°C
Solvent: chloroform
Flow rate: 1.0 mL/min
Concentration: 0.4 w/v%
Injection volume: 100 µL
Detector: 2414 manufactured by Nihon Waters K.K.
Molecular weight equivalent: in terms of polystyrene (PS)
Molecular weight range of the calibration curve used to calculate the molecular weight distribution: 500 to 3,787,000

### <(Maximum Stress After Immersion in Water)/(Maximum Stress Before Immersion in Water)>

The aliphatic polyester-based resin composition or the aliphatic polyester-based resin obtained in each of Examples and Comparative Examples was hot-pressed to obtain a film having a thickness of 0.4 to 0.6 mm. The obtained film was cut into a size of 150 mm in length and 15 mm in width to obtain a test piece for a tensile test. A plurality of test pieces were prepared from the same aliphatic polyester-based resin composition or aliphatic polyester-based resin.

Some of the test pieces were completely immersed in pure water at 23°C.

Using the test piece taken out of water, a film tensile test was performed in accordance with JIS K 7127:1999. The test speed was 5 mm/min. The maximum stress was measured and was defined as the maximum stress after immersion in water.

On the other hand, the test piece that was not immersed in water was also subjected to a film tensile test in accordance with JIS K 7127:1999. The test speed was 5 mm/min. The maximum stress was measured and was defined as the maximum stress before immersion in water.

The maximum stress after immersion in water with respect to the maximum stress before immersion in water was taken as a value of (maximum stress after immersion in water)/(maximum stress before immersion in water).

The larger (closer to 1) the value of (maximum stress after immersion in water)/(maximum stress before immersion in water), the less the deterioration in physical properties due to immersion in water and the better.

In Table 1, the maximum stress (tensile maximum stress) of the raw material aliphatic polyester-based resin measured by the above-described method is described.

From the viewpoint of easily obtaining a molded article having excellent mechanical properties such as tensile properties, the maximum tensile stress of the aliphatic polyester-based resin measured under the conditions of a test speed of 5 mm/min based on JIS K 7127:1999 is preferably 10 MPa or more, more preferably 20 MPa or more, and still more preferably 30 MPa or more.

### <Shape Retention When Allowed to Stand in High Humidity Environment>

The aliphatic polyester-based resin composition obtained in each of Examples and Comparative Examples or the aliphatic polyester-based resin obtained in each of Comparative Examples was hot-pressed to obtain a film having a thickness of 0.4 to 0.6 mm. The obtained film was cut into a size of 150 mm in length and 15 mm in width to obtain a test piece for shape observation.

The test piece was allowed to stand in an environment of 27°C and 95% RH for 3 days, and the change in shape was observed.

In a case where the test piece after standing was not deformed and there was no significant change in shape compared with that before standing, shape retention during standing in a high-humidity environment was possible and was evaluated as "A (good)", and in a case where deformation such as bending occurred in the test piece after standing and there was a significant change in shape compared with that before standing, shape retention during standing in a high-humidity environment was not possible and was evaluated as "B (poor)".

When the evaluation is "A (good)", the aliphatic polyester-based resin composition is excellent in durability against moisture, which is preferable.

### [Raw Materials]

The raw materials used in Examples and Comparative Examples are shown in Table 1 and Table 2.

In Table 1, the polylactic acid is "Ingeo 4060D" manufactured by NatureWorks LLC, the polybutylene succinate is "BioPBS" manufactured by Mitsubishi Chemical Corporation, and the polybutylene adipate succinate is "TH801T" manufactured by Xinjiang Blue Ridge Tunhe Sci. & Tech. Co., Ltd.

In addition, triphenyl phosphate and tricalcium phosphate were prepared as phosphorus compounds. The solubility of triphenyl phosphate in water at 20°C was 1.1 mg/100 mL, and the molecular weight was 326. The solubility of tricalcium phosphate in water at 20°C was 2.2 mg/100 mL, and the molecular weight was 310.

### [Table 1]

**Table 1**

| | Abbreviation | Resin name | Glass transition temperature (°C) | Mw(×10⁴) | Maximum tensile stress (MPa) |
|---|---|---|---|---|---|
| Aliphatic polyester-based resin | PLA | Polylactic acid | 56 | 19.0 | 36.8 |
| | PBS | Polybutylene succinate | -30 | 15.8 | 27.8 |
| | PBAT | Polybutylene adipate succinate | -35 | 16.2 | 25.9 |
| | PHBH | Poly(3-hydroxybutyrate-co-3-hydroxyhexanoate) | 0 | 17.9 | 14.2 |

### [Table 2]

**Table 2**

| | | Solubility in water at 20°C (g/100 mL) | 10% weight reduction temperature (°C) | Molecular weight | Nitrogen percentage (%) in compound |
|---|---|---|---|---|---|
| | Oxamide | 0.02 | 254 | 88 | 32 |
| Nitrogen compound | CDU (2-oxo-4-methyl-6-ureidohexahydropyrimidine) | 0.08 | 215 | 172 | 33 |
| | IBDU (isobutylidene diurea) | 0.09 | 206 | 174 | 32 |
| | Tetramethylenediamine dihydrochloride | 150 | 320 | 161 | 17 |
| | Ammonium sulfate | 74 | 306 | 132 | 21 |

### [Production of Aliphatic Polyester-Based Resin Composition]

### Example 1

100 parts by mass of PLA as an aliphatic polyester-based resin and 15 parts by mass of oxamide as a nitrogen compound were supplied to an extruder having an inner diameter of 50 mm, and melt-kneaded at a maximum setting temperature of 180°C to obtain a melt-kneaded product. Thereafter, the melt-kneaded product was extruded into a strand shape from a strand-forming die provided on the downstream side of the extruder. The extruded strand shape product was water-cooled and cut with a pelletizer to obtain a particulate aliphatic polyester-based resin composition. The evaluation results of the obtained aliphatic polyester-based resin composition are shown in Table 3.

### Examples 2 to 14 and Comparative Examples 2 and 3

Aliphatic polyester-based resin compositions were obtained in the same manner as in Example 1, except that the types and amounts of the aliphatic polyester-based resin and the nitrogen compound were changed as shown in Table 3, and the phosphorus compound was added as shown in Table 3 in Examples 7 to 10, 12 and 14. The phosphorus compound was supplied to an extruder together with the nitrogen compound. The evaluation results of the obtained aliphatic polyester-based resin composition are shown in Table 3. The amounts of the nitrogen compound and the phosphorus compound are expressed in terms of parts by mass with respect to 100 parts by mass of the aliphatic polyester-based resin.

The 10% weight reduction temperature of the aliphatic polyester-based resin composition containing oxamide obtained in Example 3 was 286°C, the 10% weight reduction temperature of the aliphatic polyester-based resin composition containing CDU obtained in Example 5 was 256°C, and the 10% weight reduction temperature of the aliphatic polyester-based resin composition containing IBDU obtained in Example 6 was 228°C.

In addition, the maximum tensile stress of the aliphatic polyester-based resin composition containing oxamide obtained in Example 3 before immersion in water was 29.4 MPa, the maximum tensile stress of the aliphatic polyester-based resin composition containing CDU obtained in Example 5 before immersion in water was 17.8 MPa, and the maximum tensile stress of the aliphatic polyester-based resin composition containing IBDU obtained in Example 6 before immersion in water was 14.4 MPa.

### Comparative Examples 1 and 4

The aliphatic polyester-based resins were evaluated in the same manner as in the aliphatic polyester-based resin compositions except that PLA was used as Comparative Example 1 and PBS was used as Comparative Example 4. The evaluation results are shown in Table 3.

The maximum tensile stress of the aliphatic polyester-based resin composition containing tetramethylenediamine dihydrochloride obtained in Comparative Example 2 before immersion in water was 18.5 MPa, and the maximum tensile stress of the aliphatic polyester-based resin composition containing ammonium sulfate obtained in Comparative Example 3 before immersion in water was 21.0 MPa.

### [Table 3]

**Table 3**

| | Aliphatic polyester-based resin | Nitrogen compound | | Phosphorus compound | | Biodegradation degree |
|---|---|---|---|---|---|---|
| | | | Parts by mass | | Parts by mass | |
| Example 1 | PLA | Oxamide | 15 | - | - | 5 |
| Example 2 | PLA | Oxamide | 5 | - | - | 3 |
| Example 3 | PLA | Oxamide | 30 | - | - | 7 |
| Example 4 | PLA | Oxamide | 50 | - | - | 15 |
| Example 5 | PLA | CDU | 30 | - | - | 7 |
| Example 6 | PLA | IBDU | 30 | - | - | 8 |
| Example 7 | PLA | Oxamide | 15 | Triphenyl phosphate | 15 | 10 |
| Example 8 | PLA | CDU | 15 | Triphenyl phosphate | 15 | 9 |
| Example 9 | PLA | Oxamide | 30 | Triphenyl phosphate | 20 | 20 |
| Example 10 | PLA | Oxamide | 15 | Tricalcium phosphate | 15 | 11 |
| Example 11 | PBS | Oxamide | 30 | - | - | 3 |
| Example 12 | PBS | Oxamide | 15 | Triphenyl phosphate | 15 | 3 |
| Example 13 | PBAT | Oxamide | 30 | - | - | 5 |
| Example 14 | PBAT | Oxamide | 15 | Triphenyl phosphate | 15 | 8 |
| Comparative Example 1 | PLA | - | - | - | - | 0 |
| Comparative Example 2 | PLA | Tetramethylenediamine dihydrochloride | 30 | - | - | 4 |
| Comparative Example 3 | PLA | Ammonium sulfate | 30 | - | - | 5 |
| Comparative Example 4 | PBS | - | - | - | - | 0 |

**Table 3 (continued)**

| | Total amount of nitrogen (µg) | Resin composition Mw (× 10⁴) | Ratio of resin composition Mw to raw material resin Mw | (Maximum stress after immersion in water)/(Maximum stress before immersion in water) | Shape retention when allowed to stand in high humidity environment |
|---|---|---|---|---|---|
| Example 1 | 0.5 | 18.7 | 0.98 | 0.97 | A |
| Example 2 | 0.4 | 18.4 | 0.97 | 0.98 | A |
| Example 3 | 0.6 | 16.4 | 0.86 | 0.95 | A |
| Example 4 | 0.8 | 15.0 | 0.79 | 0.91 | A |
| Example 5 | 3.2 | 15.9 | 0.84 | 0.94 | A |
| Example 6 | 3.5 | 14.2 | 0.75 | 0.90 | A |
| Example 7 | 0.5 | 17.8 | 0.94 | 0.99 | A |
| Example 8 | 1.7 | 17.1 | 0.90 | 0.95 | A |
| Example 9 | 0.6 | 16.0 | 0.84 | 0.95 | A |
| Example 10 | 0.5 | 17.6 | 0.93 | 0.98 | A |
| Example 11 | 0.6 | 13.1 | 0.83 | 0.90 | A |
| Example 12 | 0.5 | 13.6 | 0.86 | 0.92 | A |
| Example 13 | 0.6 | 13.3 | 0.85 | 0.91 | A |
| Example 14 | 0.5 | 13.8 | 0.84 | 0.91 | A |
| Comparative Example 1 | 0 | 19.0 | - | 0.99 | A |
| Comparative Example 2 | 40 | 17.3 | 0.91 | 0.71 | B |
| Comparative Example 3 | 26 | 16.9 | 0.89 | 0.67 | B |
| Comparative Example 4 | 0 | 15.8 | - | 0.99 | A |

### Example 15

A particulate aliphatic polyester-based resin composition was obtained in the same manner as in Example 1 except that 100 parts by mass of PHBH as an aliphatic polyester-based resin and 30 parts by mass of oxamide as a nitrogen compound were used. The evaluation results of the obtained aliphatic polyester-based resin composition are shown in Table 4.

The maximum tensile stress of the aliphatic polyester-based resin composition containing oxamide obtained in Example 15 before immersion in water was 13.7 MPa.

### Example 16

A particulate aliphatic polyester-based resin composition was obtained in the same manner as in Example 15 except that the amount of oxamide was changed as shown in Table 4 and the phosphorus compound was added as shown in Table 4. The phosphorus compound was supplied to an extruder together with the nitrogen compound. The evaluation results of the obtained aliphatic polyester-based resin composition are shown in Table 4. The amounts of the nitrogen compound and the phosphorus compound are expressed in terms of parts by mass with respect to 100 parts by mass of the aliphatic polyester-based resin.

### Comparative Example 5

In Comparative Example 5, PHBH was used as the aliphatic polyester-based resin and evaluated in the same manner as in the aliphatic polyester-based resin composition. The evaluation results are shown in Table 4.

### [Table 4]

**Table 4**

| | Aliphatic polyester-based resin | Nitrogen compound | | Phosphorus compound | | Biodegradation degree |
|---|---|---|---|---|---|---|
| | | | Parts by mass | | Parts by mass | |
| Example 15 | PHBH | Oxamide | 30 | - | - | 55 |
| Example 16 | PHBH | Oxamide | 15 | Triphenyl phosphate | 15 | 65 |
| Comparative Example 5 | PHBH | - | - | - | - | 7 |

**Table 4 (continued)**

| | Total amount of nitrogen (µg) | Resin composition Mw (× 10⁴) | Ratio of resin composition Mw to raw material resin Mw | (Maximum stress after immersion in water)/(Maximum stress before immersion in water) | Shape retention when allowed to stand in high humidity environment |
|---|---|---|---|---|---|
| Example 15 | 0.6 | 14.2 | 0.79 | 0.93 | A |
| Example 16 | 0.4 | 14.8 | 0.83 | 0.94 | A |
| Comparative Example 5 | 0 | 17.9 | - | 0.96 | A |

From the results shown in Tables 3 and 4, it is understood that the aliphatic polyester-based resin compositions of Examples have a high biodegradation degree and a large value in a film tensile test after immersion in water. Furthermore, it is understood that the aliphatic polyester-based resin compositions of Examples can also maintain the shape thereof when stored under high humidity. Thus, it is understood that the aliphatic polyester-based resin composition of the present invention has marine degradability and is excellent in durability against moisture. In the aliphatic polyester-based resin compositions of Comparative Examples, it is considered that a large amount of the nitrogen compound was eluted when the aliphatic polyester-based resin compositions were immersed in water or stored under high humidity, so that the tensile properties of the compositions were deteriorated or the compositions were deformed.

## Claims

1. A method for producing an aliphatic polyester-based resin composition produced by heating and kneading an aliphatic polyester-based resin and a nitrogen compound,
wherein a solubility of the nitrogen compound in water at 20°C is 50 g/100 mL or less.

2. The method for producing an aliphatic polyester-based resin composition according to claim 1, wherein a 10% weight reduction temperature of the nitrogen compound determined by thermogravimetric analysis is 210°C or higher.

3. The method for producing an aliphatic polyester-based resin composition according to claim 1 or 2, wherein a blending amount of the nitrogen compound is 1 part by mass or more and 50 parts by mass or less with respect to 100 parts by mass of the aliphatic polyester-based resin.

4. The method for producing an aliphatic polyester-based resin composition according to claim 1 or 2, wherein the resin composition further comprises a phosphorus compound, and a total of a blending amount of the nitrogen compound and a blending amount of the phosphorus compound is 2 parts by mass or more and 50 parts by mass or less with respect to 100 parts by mass of the aliphatic polyester-based resin.

5. The method for producing an aliphatic polyester-based resin composition according to claim 4, wherein a ratio of the blending amount of the phosphorus compound to the blending amount of the nitrogen compound is 1 to 1000.

6. The method for producing an aliphatic polyester-based resin composition according to claim 4, wherein the phosphorus compound has a solubility in water at 20°C of 50 mg/100 mL or less.

7. The method for producing an aliphatic polyester-based resin composition according to claim 1 or 2, wherein the nitrogen compound comprises oxamide.

8. The method for producing an aliphatic polyester-based resin composition according to claim 4, wherein the phosphorus compound comprises at least one selected from the group consisting of triphenyl phosphate and tricalcium phosphate.

9. An aliphatic polyester-based resin composition comprising an aliphatic polyester-based resin and a nitrogen compound,
wherein a total amount of nitrogen contained per 1 mL of water when the aliphatic polyester-based resin composition is immersed in water at 23°C for 72 hours at a proportion of 4 to 6 g of the aliphatic polyester-based resin composition per 100 mL of water is 0.01 µg or more and 20 µg or less per 1 g of the aliphatic polyester-based resin composition.

10. The aliphatic polyester-based resin composition according to claim 9, wherein a solubility of the nitrogen compound in water at 20°C is 50 g/100 mL or less.

11. The aliphatic polyester-based resin composition according to claim 9 or 10, wherein a content of the nitrogen compound in the aliphatic polyester-based resin composition is 1 part by mass or more and 50 parts by mass or less with respect to 100 parts by mass of the aliphatic polyester-based resin.

12. The aliphatic polyester-based resin composition according to claim 9 or 10, wherein the aliphatic polyester-based resin composition further comprises a phosphorus compound, and a total of a content of the nitrogen compound and a content of the phosphorus compound in the aliphatic polyester-based resin composition is 2 parts by mass or more and 50 parts by mass or less with respect to 100 parts by mass of the aliphatic polyester-based resin.

13. The aliphatic polyester-based resin composition according to claim 9 or 10, wherein a biodegradation degree of the aliphatic polyester-based resin composition after the aliphatic polyester-based resin composition is held in seawater having a COD of 1 mg/L or less for 28 days is 1% or more.

14. An aliphatic polyester-based resin composition comprising an aliphatic polyester-based resin and oxamide.

15. The aliphatic polyester-based resin composition according to claim 14, further comprising a phosphorus compound.

16. A marine degradation promoter used for obtaining the aliphatic polyester-based resin composition according to claim 9, wherein the marine degradation promoter comprises the nitrogen compound, and a solubility of the nitrogen compound in water at 20°C is 50 g/100 mL or less.
